# EUROPEAN PATENT APPLICATION

(11) **EP 1 832 899 A1**
(43) Date of publication of application: **12.09.2007**
(21) Application number: 05809394.9
(22) Date of filing: 22.11.2005
(51) Int. Cl.: G02B 5/30, G03H 1/02, G11B 7/24

(54) **OPTICAL RECORDING MEDIUM-USE FILTER, OPTICAL RECORING MEDIUM AND PRODUCTION METHOD THEREFOR, AND OPTICAL RECORDING METHOD AND OPTICAL REPRODUCING METHOD**

(30) Priority: 03.12.2004 JP 2004352081
(71) Applicant: FUJIFILM Corporation, Minato-ku Tokyo 106-8620 (JP)
(72) Inventor: KAMADA, Kou c/o FujiFilm Corporation, Fujinomiya-shi, Shizuoka 418-8666 (JP); ICHIHASHI, Mitsuyoshi c/o Fuji Film Corporation, Minami-Ashigara-shi, Kanagawa 250-0193 (JP); YUMOTO, Masatoshi Fuji Photo Film Co., Ltd., Fujinomiya-shi, Shizuoka 418-8666 (JP)
(74) Representative: HOFFMANN EITLE
(86) International application number: PCT/JP2005/021487
(87) International publication number: WO 2006/059517

(57) **Abstract**

The present invention provides a filter for optical recording media capable of preventing diffused reflection from a reflective layer caused by an information beam and a reference beam and preventing occurrences of noise without causing deviation in selective reflection wavelength even when an incidence angle is changed, a holographic optical recording medium allowing for high-density recording which has not been conventionally provided, using the filter for optical recording media, and a method for producing the optical recording medium efficiently at low-cost. To this end, the present invention provides a holographic optical recording medium having an upper substrate, an under substrate, a recording layer which records information using holography on the under substrate, and a filter layer between the under substrate and the recording layer, wherein the filter layer contains a monolayer cholesteric liquid crystal layer containing at least a nematic liquid crystal compound and a photoreactive chiral compound.

## Description

### Technical Field

The present invention relates to a filter for an optical recording medium suitably used as a wavelength selective reflection film in a holographic optical recording medium capable of recording a high density image which has not yet been conventionally achieved, an optical recording medium using the filer for the optical recording medium, a method for producing the optical recording medium, as well as an optical recording method and an optical reproducing method using the optical recording medium.

### Background Art

An optical recording medium is exemplified as one of recording media in which information in large volume such as high density images can be written. As this type of optical recording medium, for example, rewritable optical recording media such as optical magnetic discs and phase change optical discs, and write-once type optical recording media such as CD-R have been put in practical use, however, requests for further enlarging the capacity of the optical recording media are going on increasing. However, all of the conventionally proposed optical recording media are based on two dimensional recording, and increasing of recording capacity has been limited. Thus, in recent years, holographic optical recording media capable of recording information in a three dimensional manner attract a lot of attention.

In the holographic optical recording medium, information is recorded generally by overlapping an information beam to which a two dimensional intensity distribution has been given with a reference beam having an almost the same intensity as the information beam inside a photosensitive recording layer and producing a distribution of optical properties inside the recording layer by utilizing an interference pattern formed by the beams. Meanwhile, when the written information is read out (reproduced), only the reference beam is irradiated to the recording layer in the same arrangement as when recorded, and a reproduction beam having an intensity distribution commensurate with the optical property distribution inside the recording layer is emitted from the recording layer.

In this holographic optical recording medium, the optical property distribution is formed three-dimensionally in the recording layer. Thus, it is possible to partially overlap a region in which information has been written by one information beam with a region in which information has been written by another information beam, i.e., multiple recording is possible. When using digital volume holography, a signal to noise ratio (S/N ratio) at one spot is extremely high. Thus, even when the S/N ratio is slightly reduced by overwriting, the original information can be faithfully reproduced. As a result, the multiple recording can be performed several hundred times, and recording capacity of optical recording media can be remarkably increased (see Patent Literature 1).

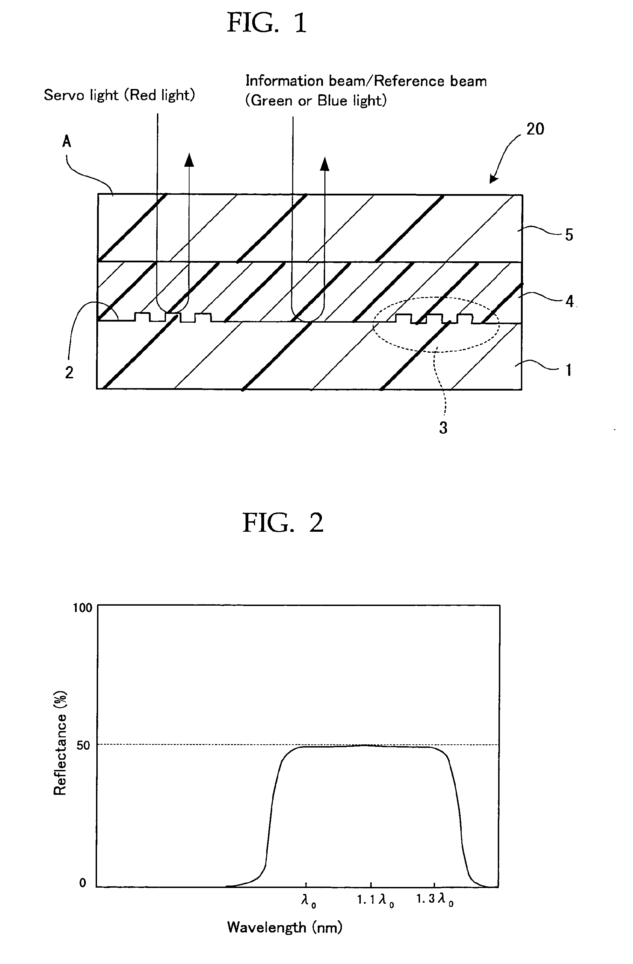

As such a holographic optical recording medium, for example, as shown in FIG. 1, an optical recording medium providing an under substrate 1 surface with a servo pit pattern 3 and having a reflective film 2 composed of aluminium on the surface of this servo pit pattern, a recording layer 4 on this reflective film and an upper substrate 5 on this recording layer have been proposed (see Patent Literature 2).

However, in an optical recording medium 20 having a layer configuration shown in FIG.1, a servo zone and a recording zone are separated in a plane, and by just that much, there is a problem that the recording density is inconveniently reduced by half.

Thus, in Patent Literature 3, a circularly polarized light is used as an information beam and a reference beam, a cholesteric liquid crystal layer or a dichroic mirror as a filter layer is provided between the recording layer and the reflective film, and the recording layer and the servo layer are overlapped in the thickness direction. The recording density is doubled by the technique. When a cholesteric liquid crystal layer of a single layer having the same turning direction as the circularly polarized light of the information beam as the above-noted filter layer in a helical structure is used, it is possible to mass-produce an optical recording medium that is excellent in productivity and inexpensive on a large scale, and filtering effect at a perpendicular incidence angle of 0° is enhanced. However, in this proposal, when an incidence angle is changed, deviation in selective reflection wavelength is caused. When the incident light is inclined 10° or more, the information beam and the reference beam pass through the filter layer to reach the reflective film, and are reflected to thereby cause noise. This means that the proposal can not be used for an incident light with ± 10° or more focused by a lens in a typically used optical system for an optical medium.

Meanwhile, when a film which is suitably used for the typically used lens optical system is formed using the dichroic mirror, multilayered deposition composed of 50 or more layers is required and the optical recording medium requires extremely high cost.

Therefore, there has not been realized efficiently mass-producing, at low cost, a holographic optical recording medium capable of preventing diffused reflection from a reflective layer caused by an information beam and a reference beam in the optical recording medium and preventing occurrences of noise without causing deviation in selective reflection wavelength even when an incidence angle is changed, and it is an actual circumstance that it has been desired to rapidly provide it.
Patent Literature 1: Japanese Patent Application Laid-Open (JP-A) No. 2002-123949
Patent Literature 2: Japanese Patent Application Laid-Open (JP-A) No. 11-311936
Patent Literature 3: Japanese Patent Application Laid-Open (JP-A) No. 2004-265472

### Disclosure of Invention

It is an object of the present invention to provide a filter for optical recording media capable of preventing diffused reflection from a reflective layer caused by an information beam and a reference beam in an optical recording medium and preventing occurrences of noise without causing deviation in selective reflection wavelength even when an incidence angle is changed, a holographic optical recording medium capable of performing high density recording which has not been conventionally achieved, using the filter for the optical recording media; a method for producing the optical recording medium efficiently at low cost, as well as an optical recording method and an optical reproducing method using the optical recording medium.

The filter for optical recording media of the present invention has a monolayer cholesteric liquid crystal layer, and the cholesteric liquid crystal layer contains at least a nematic liquid crystal compound and a photoreactive chiral compound. According to the filter for optical recording media, the filter has the monolayer cholesteric liquid crystal layer and the cholesteric liquid crystal layer contains at least the nematic liquid crystal compound and the photoreactive chiral compound. Thus, even when an incidence angle is changed, incidence angle dependency of reflection of irradiation light can be eliminated without causing deviation of selective reflection wavelength.

In the filter for optical recording media of the present invention, an aspect in which the photoreactive chiral compound has a chiral site and a photoreactive group and the chiral site is at least one selected from isosorbide compounds, isomanide compounds and binaphthol compounds, and an aspect in which the photoreactive group induces isomerization from trans to cis in a carbon-carbon double bond by light irradiation, are preferable.

According to the filter for optical recording media of the present invention, by using a photoreactive chiral compound which has photosensitivity and can largely change a helical pitch of liquid crystal by light as the above noted chiral compound and controlling the content of the photoreactive chiral compound and the UV irradiation time period, the filter for optical recording media in which the helical pitch has been continuously changed in the thickness direction of the liquid crystal layer can be obtained.

In the filter for optical recording media of the present invention, the following aspects are also preferable. Namely, an aspect in which the cholesteric liquid crystal layer has a selective reflection wavelength zone, and the selective reflection wavelength zone is continuous; an aspect in which the width of the selective reflection wavelength zone in the cholesteric liquid crystal layer is 100 nm or more; an aspect in which a light having a first wavelength is transmitted and a light having a second wavelength which is different from the light having the first wavelength is reflected; an aspect in which the light having the first wavelength has a wavelength of 350 nm to 600 nm and the light having the second wavelength has a wavelength of 600 nm to 900 nm; an aspect in which a light reflectance at λ₀ to λ₀/cos20° is 40% or more, where λ₀ represents an irradiation light wavelength; an aspect in which a light reflectance at λ₀ to λ₀/cos40° is 40% or more, where λ₀ represents an irradiation light wavelength; an aspect of a filter for optical recording media used as a selective reflection film in an optical recording medium which records information by utilizing holography; and an aspect in which the optical recording medium records information by irradiating the optical recording medium with an information beam and a reference beam as a coaxial light flux based on an interference pattern formed by interference between the information beam and the reference beam.

The optical recording medium of the present invention has an upper substrate, an under substrate, a recording layer in which the information is recorded by utilizing holography on the under substrate, and a filter layer between the under substrate and the recording layer. The filter layer has a monolayer cholesteric liquid crystal layer, and the cholesteric liquid crystal layer contains at least a nematic liquid crystal compound and a photoreactive chiral compound.

According to the optical recording medium, with the above-noted configuration, the information beam and the reference beam and further reproduction beam used upon recording or reproducing do not reach the reflection film without causing deviation of selective reflection wavelength even when an incidence angle is changed. Thus, it is possible to prevent occurrences of diffused light caused by diffused reflection on a reflected surface. Therefore, a reproduced image can be detected at least to such an extent that errors can be corrected without causing a problem that noise caused by diffused light is not overlapped on a reproduced image then to be detected by a CMOS sensor or on CCD. The greater amount of a noise component by diffused light requires greater multiplicity of the hologram. That is, the greater the multiplicity is, the smaller the diffraction efficiency is, e.g., when the multiplicity is 10 or more, a diffraction efficiency from one hologram is extremely small. When diffused noise is caused, it is extremely difficult to detect a reproduced image. The present invention makes it possible to eliminate difficulties and can realize the high density image recording which has not been achieved conventionally.

In the optical recording medium of the present invention, the following aspects are preferable. Namely, an aspect in which photoreactive chiral compound has a chiral site and a photoreactive group, and the chiral site is at least one selected from isosorbide compounds, isomanide compounds and binaphthol compounds; and an aspect in which the photoreactive group is a group which induces isomerization from trans to cis in a carbon-carbon double bond by light irradiation.

According to the optical recording medium of the present invention, by using the photoreactive chiral compound which has photosensitivity and can largely change the helical pitch of the liquid crystal by light as the above-noted chiral compound and controlling the content of the photoreactive chiral compound and the UV irradiation time period, a filter layer in which the helical pitch has been continuously changed in the thickness direction of the liquid crystal layer can be obtained.

In the optical recording medium of the present invention, the following aspects are preferable. Namely, an aspect in which the cholesteric liquid crystal layer has a selective reflection wavelength zone, and the selective reflection wavelength zone is continuous; an aspect in which the width of the selective reflection wavelength zone in the cholesteric liquid crystal layer is 100 nm or more; an aspect in which a light having a first wavelength is transmitted to the filter layer and a light having a second wavelength which is different from the light having the first wavelength is reflected by the filter layer; an aspect in which the light having the first wavelength has a wavelength of 350 nm to 600 nm and the light having the second wavelength has a wavelength of 600 nm to 900 nm; an aspect in which a light reflectance at λ₀ to λ₀/cos20° is 40% or more, where λ₀ represents an irradiation light wavelength; an aspect in which a light reflectance at λ₀ to λ₀/cos40° is 40% or more, where λ₀ represents an irradiation light wavelength; an aspect in which the substrate comprises a servo pit pattern; an aspect in which the servo pit pattern has a reflection film on the surface thereof; and an aspect in which the reflection film is a metallic reflection film.

In the optical recording medium of the present invention, an aspect of the optical recording medium further containing a first gap layer for smoothening a substrate surface between the filter layer and the reflection film is preferable. According to the aspect of the optical recording medium of the present invention, by providing the first gap layer between the filter layer and the reflection film, it is possible to protect the reflection film as well as control the size of hologram generated on the recording layer.

In the optical recording medium of the present invention, an aspect of the optical recording medium further containing a second gap layer between the recording layer and the filter layer is preferable. According to the optical recording medium of the present invention, by providing the second gap layer, it is possible to make points focused by the information beam and the reproduction beam present. When the focused area is filled with a photopolymer, a monomer is excessively consumed due to excessive exposure to thereby reduce a multiple recording capacity. Thus, it is effective to provide the second gap layer which is inert and transparent.

The method for producing an optical recording medium of the present invention includes forming a filter layer by processing a filter for optical recording media according into an optical recording medium shape, and bonding the processed filter to an under substrate to thereby form a filter layer,

According to the method for producing the optical recording medium of the present invention, in the filter layer forming step, the filter for optical recording media is cut out into an optical recording medium shape and the cut filter is bonded to the under substrate to thereby form a filter layer. Thus, it is possible to mass produce the optical recording medium more efficiently at lower cost than conventional methods.

In the optical recording method of the present invention, the optical recording medium is irradiated with an information beam and a reference beam as a coaxial light flux, and information is recorded on the recording layer based on an interference pattern formed by interference between the information beam and the reference beam.

According to the optical recording method of the present invention, by irradiating the optical recording medium of the present invention with the information beam and the reference beam as a coaxial light flux and recording information on the recording layer based on the interference pattern formed by interference between the information beam and the reference beam to thereby realize high density recording which has not been conventionally achieved.

In the optical reproducing method of the present invention, the interference pattern recorded on the recording layer by the optical recording method of the present invention is irradiated with a reference beam to thereby reproduce the information.

According to the optical reproducing method of the present invention, it is possible to efficiently and correctly read out the interference patterns recorded in the recording layer by the optical recording method of the present invention and reproduce the high density recording information.

### BRIEF DESCRIPTION OF THE DRAWINGS

FIG.1 is a schematic sectional view showing one example of a structure of a conventional optical recording medium.
FIG. 2 is a graph showing a reflection property to an incident light from a front side (0°) of a filter for optical recording media of the present invention.
FIG. 3 is a graph showing a reflection property to an incident light from 40° inclined direction in the filter for optical recording media of the present invention.
FIG. 4 is a graph showing a reflection property to an incident light from a front side (0°) of another filter for optical recording media of the present invention.
FIG. 5 is a graph showing a reflection property to an incident light from 20° inclined direction in another filter for optical recording media of the present invention.
FIG. 6 is a schematic sectional view showing one example of the optical recording medium according to a first embodiment by the present invention.
FIG. 7 is a schematic sectional view showing one example of the optical recording medium according to a second embodiment by the present invention.
FIG. 8 is an illustrative view showing one example of an optical system mounted around the optical recording medium of the present invention.
FIG. 9 is a block diagram showing one example of the entire structure of an optical recording reproducing apparatus mounted with the optical recording medium of the present invention.

### BEST MODES FOR CARRYING OUT THE INVENTION

### (Filter for optical recording media)

The filter for optical recording media of the present invention has a monolayer cholesteric liquid crystal layer, a base material and if necessary further has other members.

### < Monolayer cholesteric liquid crystal layer >

The monolayer cholesteric liquid crystal layer contains at least a nematic liquid crystal compound and a photoreactive chiral compound, a polymerizable monomer, and if necessary further contains other components.

In the cholesteric liquid crystal layer in the filter for optical recording media of the present invention, it is preferable that the perpendicular incidence angle is 0° and a light reflectance at λ₀ to λ₀/cos20° (λ₀ represents an irradiation light wavelength) in the range of ±20° is 40% or more by using the photoreactive chiral compound and continuously changing the helical pitch in the thickness direction of the liquid crystal, and it is particularly preferable that the perpendicular incidence angle is 0° and the light reflectance at λ₀ to λ₀/cos40° (λ₀ represents the irradiation light wavelength) in the range of ±40° is 40% or more.

When the light reflectance at λ₀ to λ₀/cos20°, particularly λ₀ to λ₀/cos40° (λ₀ represents the irradiation light wavelength) is 40% or more, it is possible to eliminate the angle dependency of the irradiation light reflection, and employ a lens optical system used for the ordinary optical recording media.

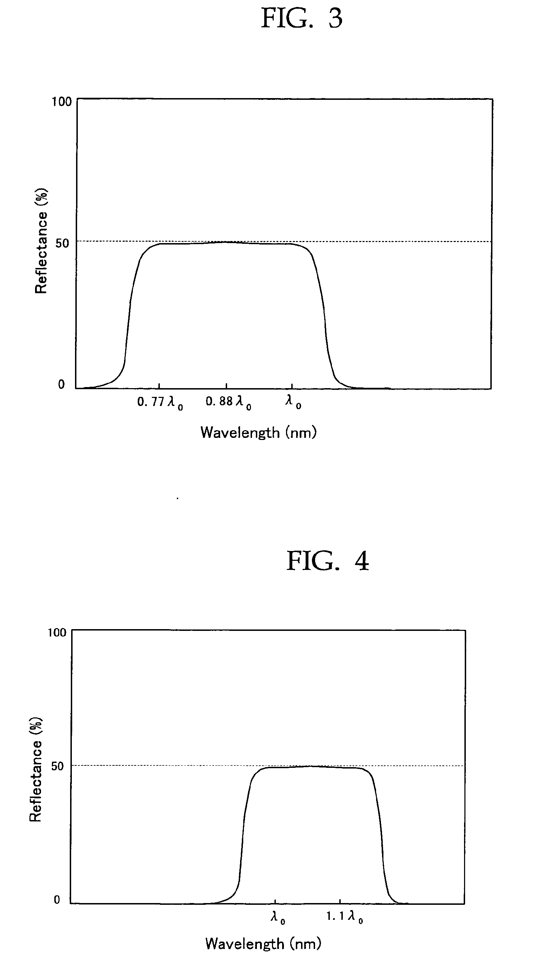

Specifically, by using the photoreactive chiral compound which has photosensitivity and can largely change the helical pitch of liquid crystal by light as the above chiral compound, and controlling the content of the chiral compound and the UV irradiation time period, a filter for optical recording media where the helical pitch has been continuously changed in the thickness direction of the liquid crystal layer can be obtained. This FIG. 2 shows that reflection property to the perpendicular incidence light from the front side (0°) is 40% or more. In contrast, for the incidence light from an oblique direction, a reflected wavelength gradually shifts to a short wavelength side, and when inclined at 40° in the liquid crystal layer, reflection property is exhibited as shown in FIG. 3.

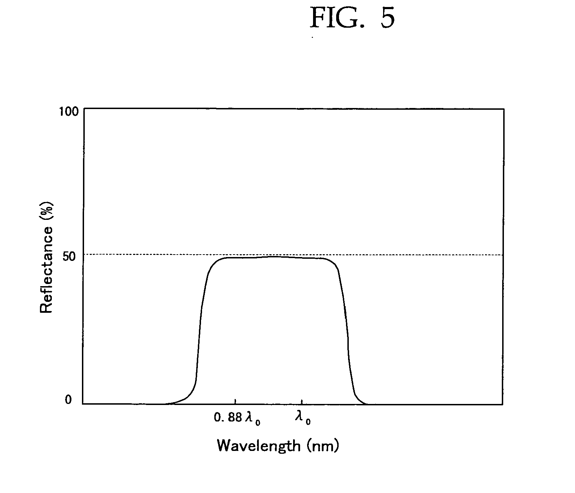

Likewise, when the helical pitch is continuously changed in the thickness direction of the liquid crystal layer by controlling the content of the photoreactive chiral compound and the UV irradiation time period, the filter for optical recording media having reflection property as shown in FIG. 4 can be obtained. This FIG. 4 shows that the reflection property to the perpendicular incidence light from the front side (0°) is 40% or more. In contrast, for the incidence light from the oblique direction, the reflected wavelength gradually shifts to the short wavelength side, and when inclined at 20° in the liquid crystal layer, the reflection property is exhibited as shown in FIG. 5.

For a reflection region λ₀ to 1.37λ₀ shown in FIG. 2, when λ₀ is 532 nm, 1.3λ₀ is 692 nm. When the servo light has a wavelength of 655 nm, the servo light is reflected. The range of λ₀ to 1.37λ₀ shown here is a suitability for the ±40° incident light in the filter for optical recording media. When such largely inclined light is used, servo control can be performed without trouble if the servo light within the ±20° incident light is used by masking itself. If the average refractive index of each of the cholesteric liquid crystal layers in the filter used is sufficiently increased, it is easy to design all the incidence angles within ±20° in the filter for optical recording media. In this case, two cholesteric liquid crystal layers of λ₀ to 1.1λ₀ shown in FIG. 4 could be laminated, and thus there is no trouble to transmit the servo light.

Therefore, from the results in FIGs 2 to 5, even when the incidence wavelength is inclined at 0° to 20° (preferably 0° to 40°), the reflectance of 40% or more is assured in the filter for optical recording media of the present invention. Thus, a filter for optical recording media having no trouble in reading out the signal is obtained.

As the cholesteric liquid crystal layer, those having a circularly polarized light separating function are preferable. The cholesteric liquid crystal layer having the circularly polarized light separating function has a selective reflection property that only the light of a circularly polarized light component in which the rotation direction (clockwise or counterclockwise) of the helix in the liquid crystal is identical to a circularly polarized light direction and the wavelength is a helical pitch of the liquid crystal is reflected. By utilizing this selective reflection property of the cholesteric liquid crystal layer, only the circularly polarized light having a specific wavelength is transmitted and separated from natural light in a certain wavelength zone. and the remaining thereof is reflected.

Therefore, in the cholesteric liquid crystal layer, it is preferable that the light having a first wavelength is transmitted and the circularly polarized light having a second wavelength, which is different from the light having the first wavelength is reflected. The light having the first wavelength preferably has a wavelength of 350 nm to 600 nm and the light having the second wavelength preferably has a wavelength of 600 nm to 900 nm.

The width of the selective reflection wavelength zone in the cholesteric liquid crystal layer is preferably 100 nm or more and more preferably 150 nm to 300 nm. When the width of the selective reflection wavelength zone is less than 100 nm, the reflection adequacy for incidence light within ±20° is sometimes insufficient.

It is also preferable that the selective reflection wavelength zone in the cholesteric liquid crystal layer is continuous. Here, being "continuous" means that there is no gap between the wavelengths at λ₀ to λ₀/cos20° (preferably λ₀ to λ₀/cos40°) and the reflectance within this range is substantially 40% or more.

### - Nematic liquid crystal compound -

The nematic liquid crystal compound is characterized in that its liquid crystal phase is solidified at temperature equal to or lower than the liquid crystal transition temperature, and can be appropriately selected from liquid crystal compounds, macromolecular liquid crystal compounds and polymerizable liquid crystal compounds having a refractive index anisotropy Δn of 0.10 to 0.40 depending on the purpose. The nematic liquid crystal can be used as a solid phase by orientating itself using an orientated substrate that has been subjected to an orientation treatment such as rubbing during a liquid crystal state upon melting, and directly cooling it to solidify.

The nematic liquid crystal compound is not particularly limited, can be appropriately selected depending on the purpose, and for example, the following compounds can be exemplified.

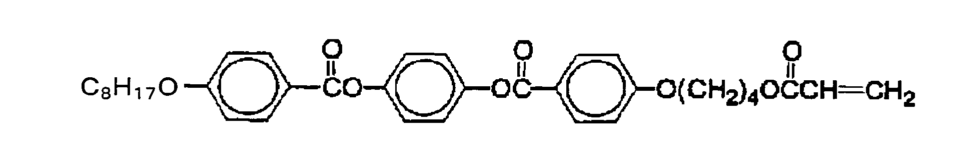

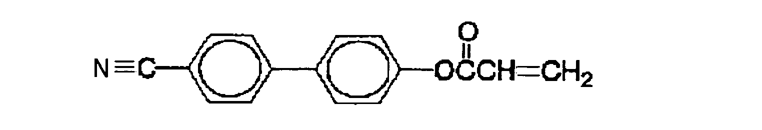

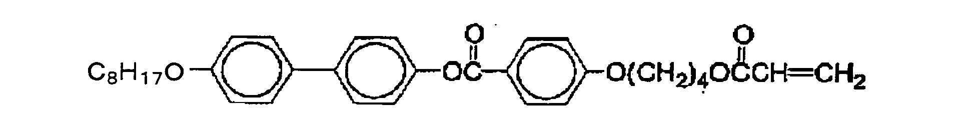

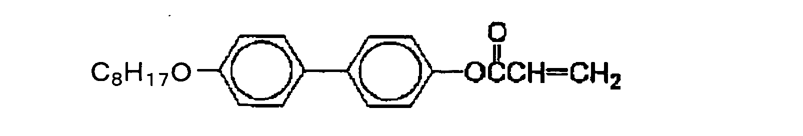

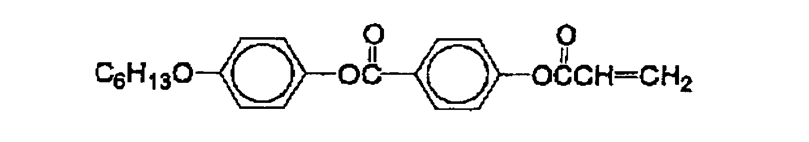

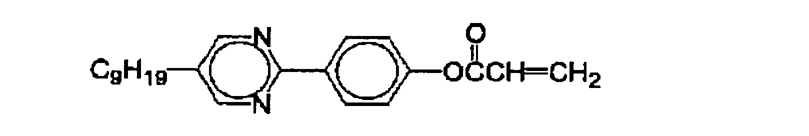

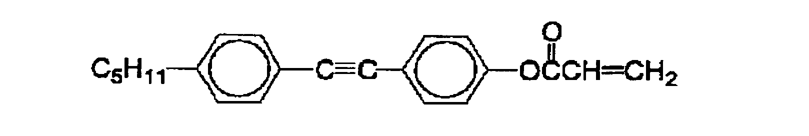

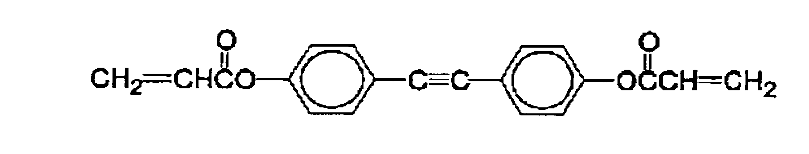

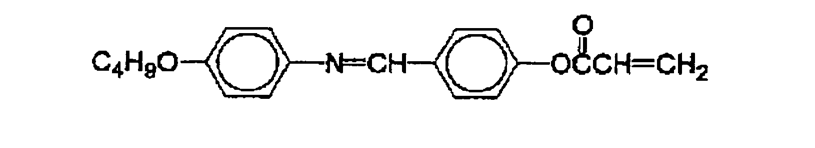

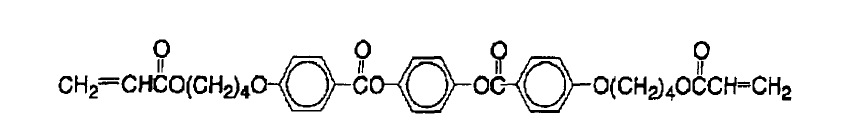

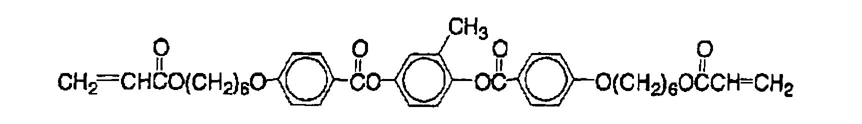

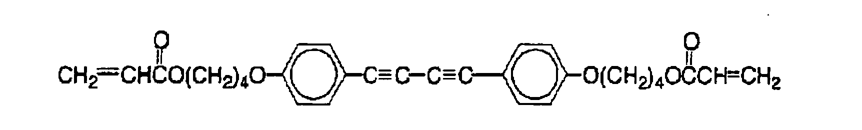

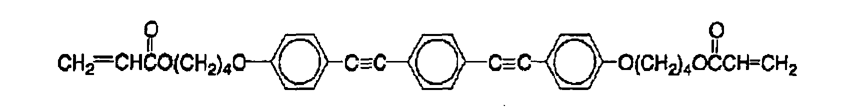

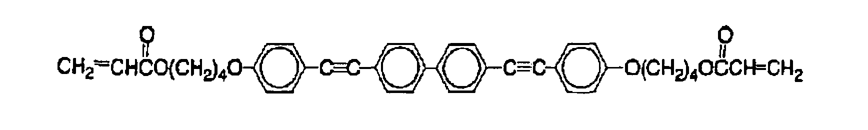

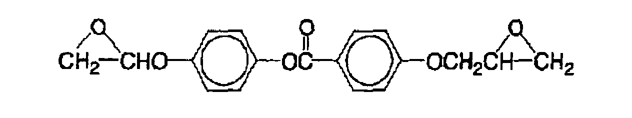

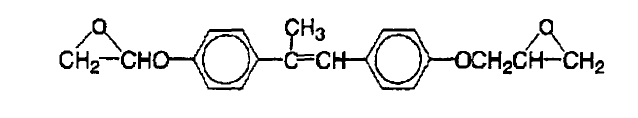

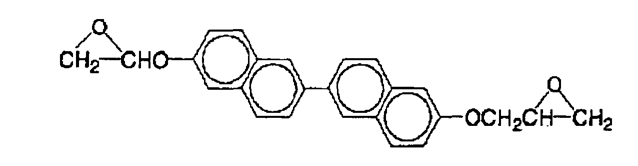

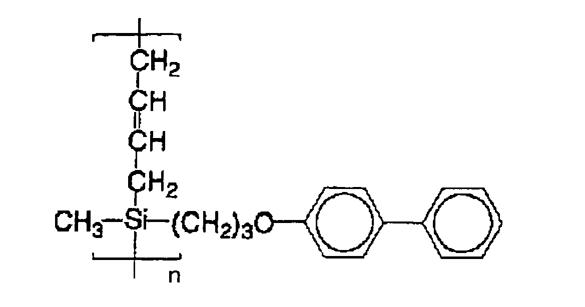

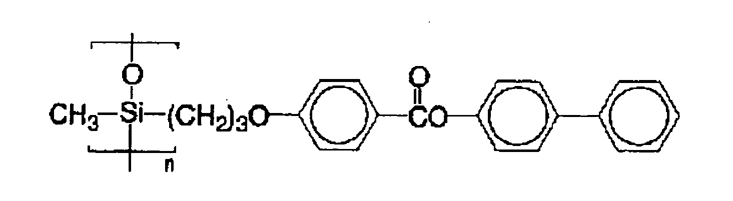

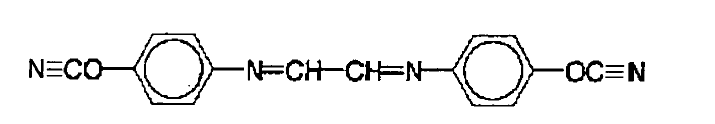

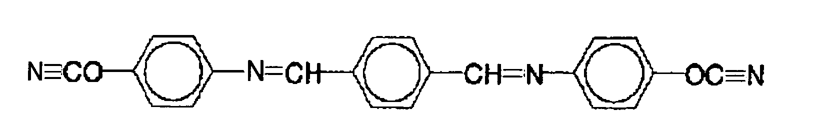

In the above formulas, n represents an integer of 1 to 1000. Those obtained by changing a side chain linking group to the following structure in the above example compounds can also be preferably exemplified.

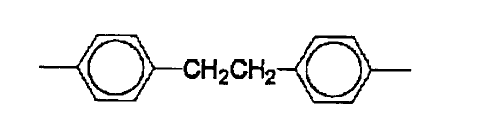

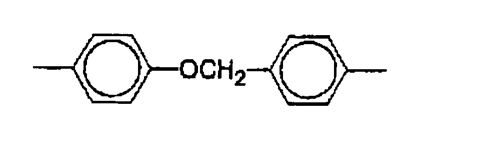

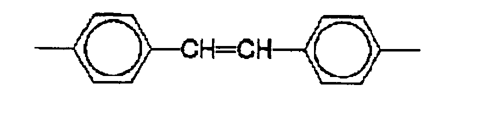

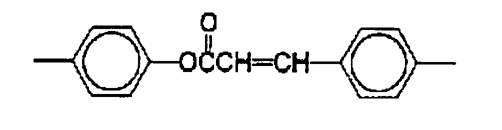

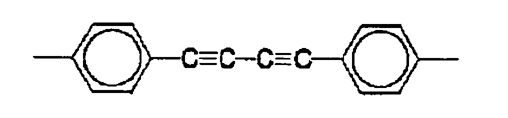

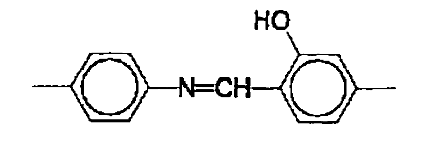

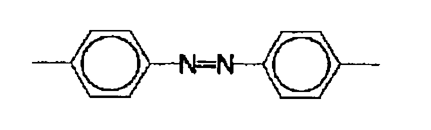

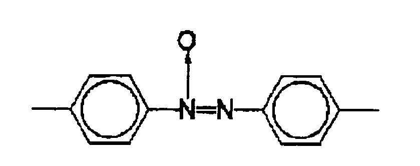

Among the above example compounds, as the nematic liquid crystal compound, the nematic liquid crystal compounds having a polymerizable group in the molecule are preferable in terms of assuring a sufficient curability. Among them, ultraviolet (UV) ray polymerizable liquid crystals are suitable. As the UV polymerizable liquid crystal, commercially available products can be used. For example, a brand name PALIOCOLOR LC242 supplied from BASF, a brand name E7 supplied from Merck, a brand name LC-SILICON-CC3767 supplied from Wacker-Chem, and brand names L35, L42, L55, L59, L63, L79 and L83 supplied from Takasago International Corporation are exemplified.

The content of the nematic liquid crystal compound is preferably 30% by mass to 99% by mass and more preferably 50% by mass to 99% by mass relative to the total solid content mass in each of the cholesteric liquid crystal layers. When the content is less than 30% by mass, the orientation of the nematic liquid crystal compound is sometimes insufficient.

### - Photoreactive chiral compound -

The photoreactive chiral compound means a chiral compound having photosensitivity and capable of largely changing the helical pitch of liquid crystal by light.

It is preferable that the photoreactive chiral compound has a chiral site and a photoreactive group and the chiral site is at least one selected from isosorbide compounds, isomanide compounds and binaphthol compounds.

As the photoreactive group, a group which induces isomerization from trans to cis in a carbon-carbon double bond by light is preferable.

The isosorbide compound is not particularly limited, can be appropriately selected depending on the purpose, and is exemplified, for example, in Japanese Patent Application Laid-Open (JP-A) Nos. 2002-80851, 2002-179681, 2002-179682, 2002-338575, 2002-338668, 2003-306490, 2003-306491, 2003-313187, 2003-313292, and 2003-313189.

The isomanide compound is not particularly limited, can be appropriately selected depending on the purpose, and is exemplified, for example, in Japanese Patent Application Laid-Open (JP-A) Nos. 2002-80478 and 2003-313188.

The binaphthol compound is not particularly limited, can be appropriately selected depending on the purpose, and is exemplified, for example, in Japanese Patent Application Laid-Open (JP-A) Nos. 2002-302487, 2002-179670 and 2002-179669.

Specific examples of the photoreactive chiral agents include the followings. 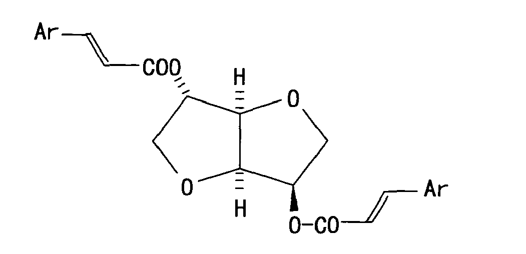 In the formula, Ar represents any one of the following formulae (1) to (6). 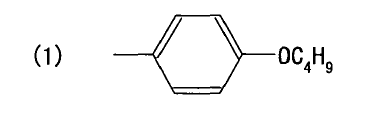 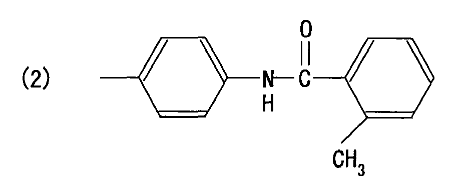 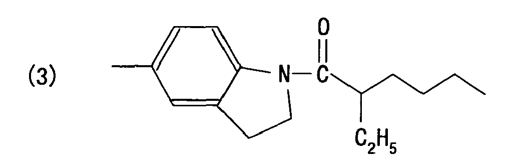 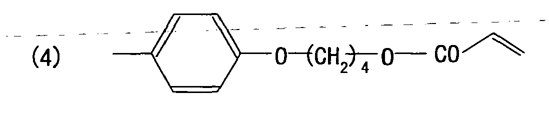 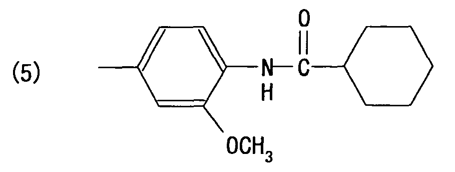 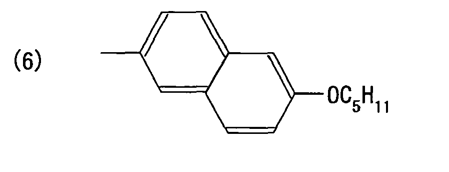 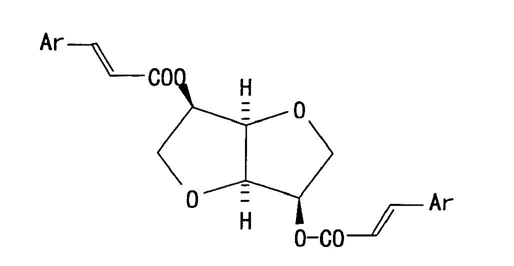 In the formula, Ar represents any one of the following formulae (7) to (12).

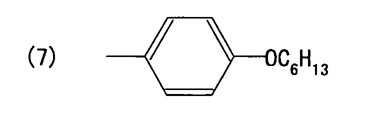

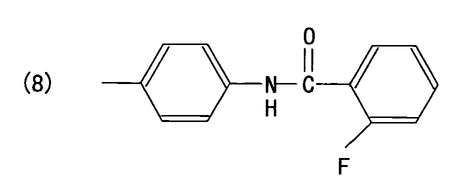

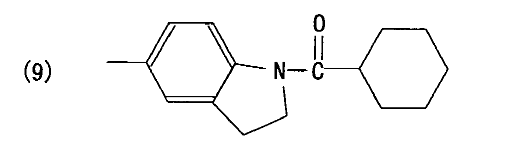

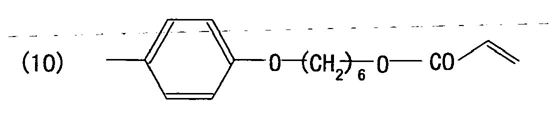

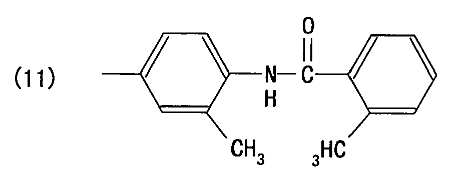

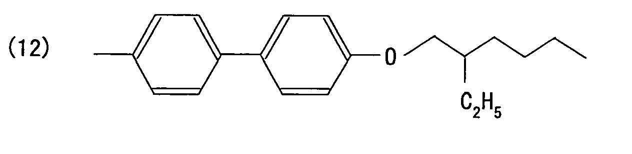

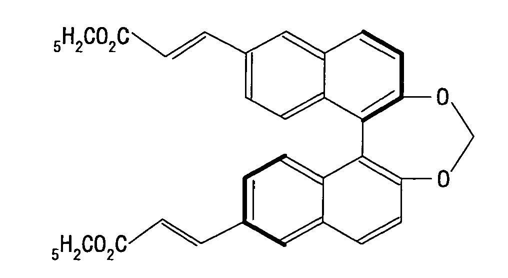

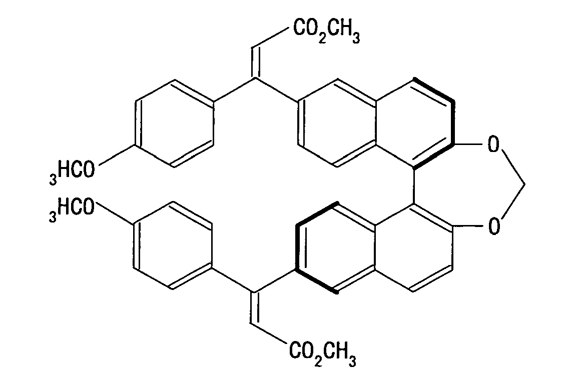

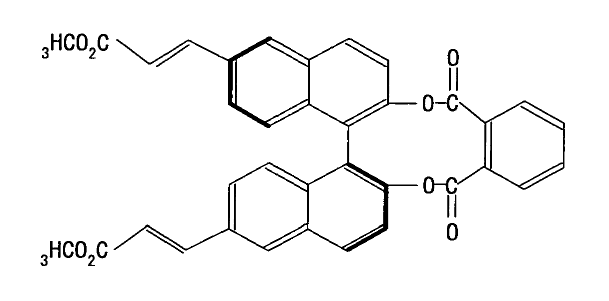

The content of the chiral compound is preferably 1% by mass to 30% by mass and more preferably 1% by mass to 20 % by mass relative to the total solid content mass of the cholesteric liquid crystal layer. When the content is less than 1 % by mass, the helical pitch is too long, and the actual wavelength sometimes departs from the selective wavelength which can be employed for the system. When it exceeds 30% by mass, the orientation in the cholesteric liquid crystal layer may be sometimes insufficient.

### - Polymerizable monomer -

A polymerizable monomer can also be used in combination in the cholesteric liquid crystal layer for the purpose of enhancing the degree of cure such as film strength. When the polymerizable monomer is combined, the kinking force of the liquid crystal due to light irradiation is changed (patterning) (e.g., the distribution of the wavelengths of the selective reflection is formed), subsequently, its helical structure (selective reflection property) is immobilized, and the strength of the cholesteric liquid crystal layer after being immobilized can be further enhanced. However, when the liquid crystal compound has a polymerizable group in the same molecule, it is not always necessary to add.

The polymerizable monomer is not particularly limited, can be appropriately selected from those known in the art depending on the purpose, and examples thereof include monomers having an ethylenically unsaturated bond. Specifically, multifunctional monomers such as pentaerythritol tetraacrylate and dipentaerythritol hexaacrylate are exemplified.

Specific examples of the monomers having an ethylenically unsaturated bond include the compounds shown below. These may be used alone or in combination of two or more.

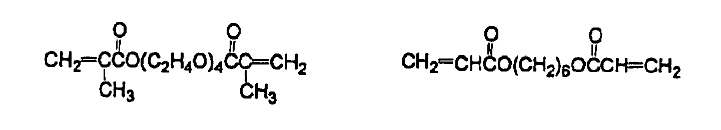

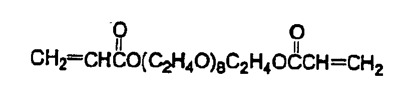

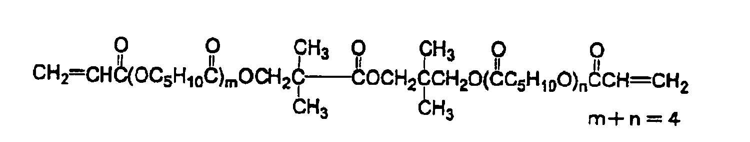

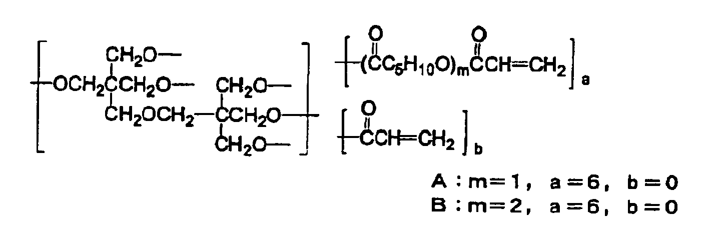

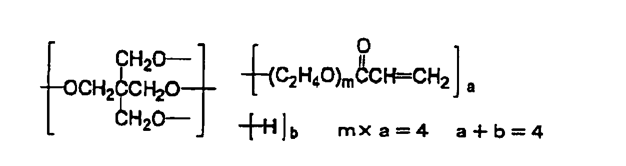

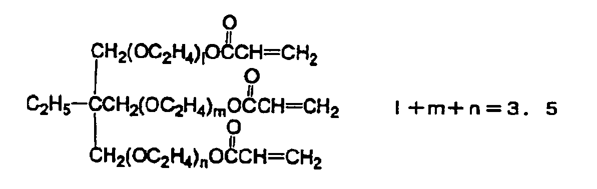

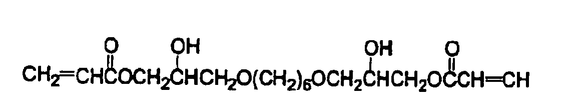

The added amount of the polymerizable monomer is preferably 0% by mass to 50% by mass and more preferably 1% by mass to 20% by mass relative to the total solid content mass in the cholesteric liquid crystal layer. When the added amount is more than 50% by mass, the orientation of the cholesteric liquid crystal layer is sometimes inhibited.

### - Other components -

The other component is not particularly limited, can be appropriately selected depending on the purpose, and examples thereof include, photopolymerizable initiators, sensitizers, binder resins, polymerization inhibitors, solvents, surfactants, thickeners, dyes, pigments, ultraviolet ray absorbers and gelling agents.

The photopolymerizable initiators are not particularly limited, can be appropriately selected from those known in the art depending on the purpose, and examples thereof include p-methoxyphenyl-2,4-bis(trichloromethyl)-s-triazine, 2-(p-butoxystyryl)-5-trichloromethyl 1,3,4-oxadiazol, 9-phenylacridine, 9,10-dimethylbenzfenadine, benzophenone/Michler's ketone, hexaarylbiimidazole/mercaptobenzimidazole, benzyldimethylketal, and thioxanthone/amine. These may be used alone or in combination of two or more.

As the photopolymerizable initiator, commercially available products can be used, and examples of the commercially available products include IRGACURE 907, IRGACURE 369, IRGACURE 784 and IRGACURE 814 supplied from Ciba Specialty Chemicals, and LUCILIN TPO supplied from BASF.

The added amount of the photopolymerizable initiator is preferably 0.1% by mass to 20% by mass and more preferably 0.5% by mass to 5% by mass relative to the total solid content mass in the cholesteric liquid crystal layer. When the added amount is less than 0.1% by mass, a long time is sometimes required because a curing efficiency upon light irradiation is low. When it exceeds 20% by mass, the light transmittance at an ultraviolet ray region to a visible light region may be sometimes lowered.

The binder resins are not particularly limited, can be appropriately selected from those known in the art depending on the purpose, and examples thereof include polyvinyl alcohol; polystyrene compounds such as polystyrene and poly-α-methylstyrene; cellulose resins such as methylcellulose, ethylcellulose and acetylcellulose; acidic cellulose derivatives having carboxyl group in the side chain; acetal resins such as polyvinyl formal and polyvinyl butyral; methacrylic acid copolymers, acrylic acid copolymers, itaconic acid copolymers, crotonic acid copolymers, maleic acid copolymers, partially esterified maleic acid copolymers; homopolymers of alkyl acrylate ester or homopolymers of alkyl methacrylate ester; other polymers having hydroxyl group. These may be used alone or in combination of two or more.

Examples of the alkyl groups in the homopolymers of alkyl acrylate ester or the homopolymers of alkyl methacrylate ester include methyl, ethyl, n-propyl, n-butyl, isobutyl, n-hexyl, cyclohexyl and 2-ethylhexyl groups.

Examples of the other polymers having the hydroxyl group include benzyl (meth)acrylate/(homopolymer of methacrylic acid) acrylic acid copolymers and polygenetic copolymers of benzyl (meth)acrylate/(meth)acrylic acid/another monomer.

The amount of the binder resin to be added is preferably 0% by mass to 80% by mass and more preferably 0% by mass to 50% by mass relative to the total solid content mass in the cholesteric liquid crystal layer. When the amount is more than 80% by mass, the orientation of the cholesteric liquid crystal layer may be sometimes insufficient.

The polymerization inhibitors are not particularly limited, can be appropriately selected depending on the purpose, and examples thereof include hydroquinone, hydroquinone monomethyl ether, phenothiazine, benzoquinone or derivatives thereof.

The added amount of the polymerization inhibitor is preferably 0% by mass to 10% by mass and more preferably 100 ppm to 1% by mass relative to the solid content of the polymerizable monomer.

The solvents are not particularly limited, can be appropriately selected from those known in the art depending on the purpose, and examples thereof include alkoxypropionate esters such as methyl 3-methoxypropionate ester, ethyl 3-methoxypropionate ester, propyl 3-methoxypropionate ester, methyl 3-ethoxypropionate ester, ethyl 3-ethoxypropionate ester and propyl 3-ethoxypropionate ester; esters of alkoxy alcohol such as 2-methoxypropyl acetate, 2-ethoxypropyl acetate and 3-methoxypropyl acetate; lactate esters such as methyl lactate and ethyl lactate; ketones such as methyl ethyl ketone, cyclohexanone and methyl cyclohexanone; γ-butylolactone, N-methyl pyrrolidone, dimethyl sulfoxide, chloroform and tetrahydrofuran. These may be used alone or in combination of two or more.

### <Base>

For material of the base, its shape, structure and size are not particularly limited, and can be appropriately selected depending on the purpose. Examples of the shape include a flat plate and a sheet. The structure may be a monolayer structure or a laminated structure. The size can be appropriately selected depending on the size of the filter for optical recording media.

Materials of the base are not particularly limited, and any of inorganic materials and organic materials can be suitably used.

Examples of the inorganic materials include glasses, quartz and silicon.

Examples of the organic materials include acetate based resins such as triacetylcellulose, polyester based resins, polyether sulfone based resins, polysulfone based resins, polycarbonate based resins, polyamide based resins, polyimide based resins, polyolefin based resins, acryl based resins, polynorbornene based resins, cellulose based resins, polyacrylate based resins, polystyrene based resins, polyvinyl alcohol based resins, polyvinyl chloride based resins, polyvinylidene chloride based resins, and polyacryl based resins. These may be used alone or in combination of two or more.

The base may be appropriately synthesized, or commercially available products may be used.

The thickness of the base is not particularly limited, can be appropriately selected depending on the purpose, and is preferably 10 µm to 500 µm and more preferably 50 µm to 300 µm. When the thickness of the substrate is less than 10 µm, adhesiveness is sometimes lowered due to flexibility of the substrate. Meanwhile, when it exceeds 500 µm, focus positions of the information beam and the reference beam must be shifted substantially, and thus the size of the optical system may be sometimes large inconveniently.

As the method for forming the filter for optical recording media, the filter can be suitably manufactured by the method for producing the optical recording medium described later, and for example, each of the cholesteric liquid crystal layers can be formed by applying a coating solution for each of the cholesteric liquid crystal layers, prepared using the above solvent on the base by a desired applying method.

As a technique having the best mass production aptitude, it is preferable that the base is prepared in a roll shape and the coating solution for each of the cholesteric liquid crystal layers is applied on the base by a lengthy continuous coater such as a bar coater, a die coater, a blade coater and a curtain coater.

Examples of the coating method include spin coating method, roll coating method, flow coating method, printing method, dip coating method, flow cast film forming method, bar coating method and gravure printing method.

The condition for irradiating the ultraviolet ray is not particularly limited, can be appropriately selected depending on the purpose, and for example, the irradiated ultraviolet ray has preferably the wavelength of 160 nm to 380 nm and more preferably 250 nm to 380 nm. An irradiation time period is, for example, preferably 0.1 seconds to 600 seconds and more preferably 0.3 seconds to 300 seconds. By controlling the condition for irradiating the ultraviolet ray, it is possible to continuously change the helical pitch in the cholesteric liquid crystal layer along the thickness direction of the liquid crystal layer.

In order to control the condition for irradiating the ultraviolet ray, the ultraviolet ray absorbing agent can also be added to the cholesteric liquid crystal layer. The ultraviolet ray absorbing agent is not particularly limited, can be appropriately selected depending on the purpose, and suitably includes, for example, benzophenone based ultraviolet ray absorbing agents, benzotriazole based ultraviolet ray absorbing agents, salicylic acid based ultraviolet ray absorbing agents, cyanoacrylate based ultraviolet ray absorbing agents and oxalic acid anilide based ultraviolet ray absorbing agents. Specific examples of these ultraviolet ray absorbing agents are described in Japanese Patent Application Laid-Open (JP-A) Nos. 47-10537, 58-111942, 58-212844, 59-19945, 59-46646, 59-109055, 63-53544, Japanese Patent Application Publication (JP-B) Nos. 36-10466, 42-26187,48-30492, J48-31255, 48-41572, 48-54965 and 50-10726, US Patent Nos. 2,719,086, 3,707,375, 3,754,919 and 4,220,711.

The thickness of the cholesteric liquid crystal layer is preferably 1 µm to 10 µm and more preferably 2 µm to 7 µm. When the thickness is less than 1 µm, a selective reflectance is insufficient, and when it exceeds 10 µm, the even orientation in the liquid crystal layer is sometimes disturbed.

It is preferable that the cholesteric liquid crystal layer is disposed on the under substrate by applying the coating solution for the cholesteric liquid crystal layer on the base material, being orientated and solidified and being punched out including the base material into a disc shape. When used for the filter layer of the optical recording medium, it is also possible to directly provide on the under substrate not through the base material. Specifically, (1) the method of directly applying on the under substrate by a procedure such as spin coating, and (2) the method in which the cholesteric liquid crystal layer is once formed on the substrate, which is laminated on the under substrate, subsequently only the base material is peeled off, and the obtained cholesteric liquid crystal layer is bonded to the under substrate are included.

The filter for optical recording media of the present invention can be used in various fields, can be suitably used for the formation or the production of the holographic optical recording medium, and can be suitably used for the following holographic optical recording medium and the method for production thereof, as well as the optical recording method and the optical reproducing method of the present invention.

### (Optical recording medium)

The optical recording medium of the present invention has an upper substrate, an under substrate, a recording layer on the under substrate and a filter layer between the under substrate and the recording layer, and has a reflection film, a first gap layer, a second gap layer and further if necessary other layers.

As the filter layer, the filter for optical recording media of the present invention is used.

### -Substrate-

For the substrate, its shape, structure and size are not particularly limited, and can be appropriately selected depending on the purpose. Examples of the shape include a disc shape and a card shape. It is necessary to select the material which can assure the mechanical strength of the optical recording medium. When the beams used for recording and reproducing enter through the substrate, the substrate is necessary to be sufficiently transparent in the wavelength region of the beams used.

As the substrate material, typically glasses, ceramics and resins are used, and the resin is particularly suitable in terms of molding property and cost.

Examples of the resins include polycarbonate resins, acryl resins, epoxy resins, polystyrene resins, acrylonitrile-styrene copolymers, polyethylene resins, polypropylene resins, silicone resins, fluorine resins, ABS resins and urethane resins.

Among them, the polycarbonate resins and the acryl resins are particularly preferable in terms of molding property, optical property and cost.

The substrate may be appropriately synthesized or the commercially available products may be used.

In the substrate, address-servo areas as multiple positioning areas linearly extending to a radius direction are provided with a given angle interval, and a sector interval between adjacent address-servo areas is a data area. In the address-servo area, information for performing focus servo and tracking servo by a sampled servo mode and the address information have been recorded in advance by emboss pits (servo pits) (preformat). The focus servo can be performed using a reflection side of the reflective film. As the information for performing the tracking servo, for example, wobble pits can be used. When the optical recording medium has a card shape, the servo pit pattern is not indispensable.

The thickness of the substrate is not particularly limited, can be appropriately selected depending on the purpose, and is preferably 0.1 mm to 5 mm and more preferably 0.3 mm to 2 mm. When the thickness of the substrate is less than 0.1 mm, deformation of the shape in disc storage is not sometimes suppressed. When it exceeds 5 mm, the weight of the entire disc is heavy and excessive load is sometimes given to a drive motor.

### - Recording layer -

In the recording layer, information can be recorded by utilizing the holography. The material whose optical properties such as absorbance index and refractive index are changed depending on the intensity of electromagnetic wave when the electromagnetic wave having a given wavelength is irradiated is used.

Materials of the recording layer are not particularly limited, can be appropriately selected depending on the purpose, and examples thereof include (1) photopolymers producing a polymerization reaction by light irradiation to polymerize, (2) photorefractive materials exhibiting a photorefractive effect (the light irradiation produces a space charge distribution to modify the refractive index), (3) photochromic materials in which the light irradiation causes molecular isomerization to modify the refractive index, (4) inorganic materials such as lithium niobate and barium titanate, and (5) chalcogen materials.

The photopolymer (1) is not particularly limited, can be appropriately selected depending on the purpose, and for example, contains a monomer and a photoinitiator, and further contains other components such as sensitizers and oligomers if necessary.

As the photopolymers, those described in, for example, "Photopolymer Handbook" (Kogyo Chosakai Publishing Co., Ltd., 1989), "Photopolymer Technology" (Nikkan Kogyo Shinbun, 1989), SPIE Proceedings Vol. 3010 p354-372 (1997) and SPIE Proceedings Vol. 3291 p89-103 (1998) can be used. Also, the photopolymers described in US Patent Nos. 5,759,721, 4,942,112, 4,959,284 and 6,221,536, International Publication Nos. WO97/44714, WO97/13183, WO99/26112 and WO97/13183, Japanese Patent (JP-B)Nos. 2880342,2873126, 2849021, 3057082 and 3161230, Japanese Patent Application Laid-Open (JP-A) Nos. 2001-316416 and 200-275859 can be used.

Examples of the method of irradiating the photopolymer with a recording light to change the optical property include a method of utilizing diffusion of a low molecular component. In order to alleviate the volume change upon polymerization, a component which diffuses in a direction opposite to a polymerization component may be added, or a compound having an acidic cleavage structure may be separately added in addition to the polymer. When the recording layer is formed using the photopolymer containing the low molecular component, the structure capable of keeping a liquid in the recording layer is sometimes required. When the compound having an acidic cleavage structure is added, the volume change may be inhibited by compensating an expansion caused by the cleavage and a shrinkage caused by the monomer polymerization.

The monomer is not particularly limited, can be appropriately selected depending on the purpose, and includes radical polymerization type monomers having an unsaturated bond such as acryl and methacryl groups and cation polymerization type monomers having an ether structure such as epoxy and oxetane rings. These monomers may be monofunctional or multifunctional, and may also be those utilizing a photo crosslinking reaction.

Examples of the radical polymerization type monomers include acryloylmorpholine, phenoxyethyl acrylate, isobornyl acrylate, 2-hydroxypropyl acrylate, 2-ethylhexyl acrylate, 1,6-hexanediol diacrylate, tripropylene glycol diacrylate, neopentyl glycol PO modified diacrylate, 1,9-nonanediol diacrylate, hydroxypivalate neopentyl glycol diacrylate, EO modified bisphenol A diacrylate, polyethylene glycol diacrylate, pentaerythritol triacrylate, pentaerythritol tetraacrylate, pentaerythritol hexaacrylate, EO modified glycerol triacrylate, trimethylolpropane triacrylate, EO modified trimethylolpropane triacrylate, 2-naphtho-1-oxyethyl acrylate, 2-carbazoyl-9-yl-ethyl acrylate, (trimethylsilyloxy)dimethylsilylpropyl acrylate, vinyl-1-naphthoate and N-vinyl carbazole.

Examples of the cation polymerization type monomers include bisphenol A epoxy resins, phenol novolak epoxy resins, glycerol triglycidyl ether, 1,6-hexane glycidyl ether, vinyl trimethoxysilane, 4-vinylphenyl trimethoxysilane, γ-methacryloxypropyl triethoxysilane and compounds represented by the following structural formulas (A) to (E).

These monomers may be used alone or in combination of two or more.

The photoinitiator is not particularly limited as long as it has a sensitivity to the recording light, and examples thereof include materials which induce radical polymerization, cation polymerization or crosslinking reaction by light irradiation.

Examples of the photoinitiator include 2,2'-bis(o-chlorophenyl)-4,4',5,5'-tetraphenyl-1,1'-biimidazole, 2,4,6-tris(trichloromethyl)-1,3,5-triazine, 2,4-bis(trichloromethyl)-6-(p-methoxyphenylvinyl)-1,3,5-triazine, diphenyliodonium tetrafluoroborate, diphenyliodonium hexafluorophosphate, 4,4'-di-t-butyldiiodonium tetrafluoroborate, 4-diethylaminophenylbenzenediazonium hexafluorophosphate, benzoin, 2-hydroxy-2-methyl-phenylpropane-2-one, benzophenone, thioxanthone, 2,4,6-trimethylbenzoyldiphenylacylphosphine oxide, triphenylbutyl borate tetraethyl ammonium and titanocene compounds represented by the following structural formulas. These may be used alone or in combination of two or more. A sensitizing dye may be combined in accordance with the wavelength of the light to be irradiated.

The photopolymer is obtained by stirring and mixing the monomer, the photoinitiator and if necessary the other component to react them. If the obtained photopolymer has a sufficiently low viscosity, the recording layer can be formed by casting. Meanwhile, when the photopolymer has a high viscosity, which can not be cast, the recording layer can be formed by placing the photopolymer on the under substrate using a dispenser and pushing the upper substrate on the photopolymer as if covering with a lid to spread evenly.

The photoreactive material (2) is not particularly limited as long as it exhibits the photoreactive effect, can be appropriately selected depending on the purpose, and contains, for example, a charge generating material and a charge transporting material, and further if necessary contains the other components.

The charge generating material is not particularly limited, can be appropriately selected depending on the purpose, and examples thereof include, phthalocyanine dyes/pigments such as metal phthalocyanine and non-metal phthalocyanine or derivative thereof; naphthalocyanine dyes/pigments; azo based dyes/pigments such as monoazo-, diazo- and triazo-dyes/pigments; perylene based dyes/pigments; indigo based dyes/pigments; quinacridone based dyes/ pigments; polycyclic quinone based dyes/pigments such as anthraquinone and anthoanthorone; cyanine based dyes/ pigments; charge transfer complexes composed of an electron receiving substance and an electron releasing substance, typified by TTF-TCNQ; azulenium salts; fullerene typified by C₆₀ and C₇₀ and methanofullerene which is a derivative thereof. These may be used alone or in combination of two or more.

The electron transporting material is the material which transports a hole or an electron, and may be a low molecular compound or a high molecular compound.

The electron transporting material is not particularly limited, can be appropriately selected depending on the purpose, and examples thereof include nitrogen-containing cyclic compounds such as indole, carbazole, oxazole, inoxazole, thiazole, imidazole, pyrazole, oxadiazole, pyrazoline, thiathiazole and triazole, or derivative thereof; hydrazine compounds; triphenylamines; triphenylmethanes; butadienes; stilbenes; quinone compounds such as anthraquinone diphenoquinone, or derivatives thereof; fullerene such as C₆₀ and C₇₀ and derivatives thereof; π conjugated polymers or oligomers such as polyacetylene, polypyrrol, polythiophene and polyaniline; σ conjugated polymers or oligomers such as polysilane and polygermane; polycyclic aromatic compounds such as anthracene, pyrene, phenanthrene and coronen. These may be used alone or in combination of two or more.

As the method of forming the recording layer using the photoreactive material, for example, a coating film is formed using a coating solution dissolving or dispersing the photoreactive material in a solvent, and the recording film can be formed by removing the solvent from this coating film. Also, the recording layer can be formed by forming a coating film using the photoreactive material heated to fluidize and rapidly cooling this coating film.

The photochromic material (3) is not particularly limited as long as it causes a photochromic reaction, can be appropriately selected depending on the purpose, and examples thereof include azobenzene compounds, stilbene compounds, indigo compounds, thioindigo compounds, spiropyran compounds, spirooxazine compounds, fluxide compound, anthracene compounds, hydrazon compounds and cinnamate compounds. Among them, the azobenzene derivatives and the stilbene derivatives which cause the structural change due to cis-trans isomerization by light irradiation, and the spiropyran derivatives and the spirooxazine derivatives which cause the structural change of ring-opening/ring-closing by light irradiation are particularly preferable.

Examples of the chalcogen materials (5) include materials comprising chalcogenide glass containing a chalcogen element and metallic particles composed of a metal dispersed in this chalcogenide glass and capable of being diffused in the chalcogenide glass by light irradiation.

The chalcogenide glass is composed of a non-oxide based amorphous material comprising the chalcogen element such as S, Te or Se, and is not particularly limited as long as light dope of the metallic particles is possible.

Examples of the amorphous materials comprising the chalcogen element include Ge-S based glass, As-S based glass, As-Se based glass and As-Se-Ce based glass. Among them, Ge-S based glass is preferable. When Ge-S based glass is used as the chalcogenide glass, a composition ratio of Ge and S which compose the glass can be optionally changed depending on the wavelength of the light to be irradiated, but the chalcogenide glass having a chemical composition mainly represented by GeS₂ is preferable.

The metallic particles are not particularly limited as long as they have the property to undergo the light dope in the chalcogenide glass by light irradiation, can be appropriately selected depending on the purpose, and examples thereof include Al, Au, Cu, Cr, Ni, Pt, Sn, In, Pd, Ti, Fe, Ta, W, Zn and Ag. Among them, Ag, Au or Cu has a property to easily give the light dope and Ag is particularly preferable because it remarkably gives the light dope.

The content of the metallic particles dispersed in the chalcogenide glass is preferably 0.1% by volume to 2% by volume and more preferably 0.1% by volume to 1.0% by volume based on the total volume of the recording layer. When the content of the metallic particles is less than 0.1 % by volume, a transmittance change due to the light dope is insufficient to reduce an accuracy of the recording. When it exceeds 2% by volume, a light transmittance of the recording material is reduced to sometimes make it difficult to sufficiently give the light dope.

The recording layer can be formed according to a method known in the art depending on the materials, and can be suitably formed by, for example, a vapor deposition method, a wet film forming method, an MBE (molecular beam epitaxy) method, a cluster ion beam method, a molecular lamination method, an LB method, a printing method and a transfer method. Among them, the vapor deposition method and the wet film forming method are preferable.

The vapor deposition is not particularly limited, can be appropriately selected from those known in the art depending on the purpose, and examples thereof include a vacuum vapor deposition method, a resistance heating vapor deposition, a chemical vapor deposition method and a physical vapor deposition method. Examples of the chemical vapor deposition method include a plasma CVD method, a laser CVD method, a heat CVD method and a gas source CVD method.

The formation of the recording layer by the wet film forming method can be suitably performed by using (applying and drying) the solution (coating solution) in which the recording layer materials have been dissolved or dispersed in the solvent. The wet film forming method is not particularly limited, can be appropriately selected from those known in the art depending on the purpose, and examples thereof include an inkjet method, a spin coating method, a kneader coating method, a bar coating method, a blade coating method, a casting method, a dipping method and curtain coating method.

The thickness of the recording layer is not particularly limited, can be appropriately adjusted depending on the purpose, and is preferably 1 µm to 1000 µm and more preferably 100 µm to 700 µm.

When the thickness of the recording layer is within the preferable range, even if shift multipleing of 10 to 300 is performed, the sufficient S/N ratio can be obtained. When the thickness is within the more preferable range, it is advantageous in that the effect is remarkable.

### - Reflection film -

The reflective film is formed on the surface of the servo pit pattern on the substrate.

As material of the reflective film, it is preferable to use a material having a high reflectance for the recording light and reference beam. When the wavelength of the light to be used is 400 nm to 780 nm, it is preferable to use, for example, Al, Al alloys, Ag and Ag alloys. When the wavelength of the light to be used is 650 nm or more, it is preferable to use Al, Al alloys, Ag, Ag alloys, Au, Cu alloys and TiN.

By the use of the optical recording medium, e.g., DVD (digital video disc) reflecting the light and capable of either writing once or deleting, as the reflective film, it is possible to write and rewrite the directory information, e.g., in what area the hologram has been recorded, when has been rewritten and where an error has occurred and how the error has been altered, without affecting the hologram.

The formation of the reflective film is not particularly limited and can be appropriately selected depending on the purpose. Various vapor phase growth methods, e.g., a vacuum vapor deposition method, a sputtering method, a plasma CVD method, a light CVD method, an ion plating method and an electron beam vapor deposition method are used. Among them, the sputtering method is excellent in mass productivity and film quality.

The thickness of the reflective film is preferably 50 nm or more and more preferably 100 nm so as to realize the sufficient reflectance.

### - First gap layer -

The first gap layer is provided between the filter layer and the reflective film as needed, and formed for the purpose of smoothening the surface of the under substrate. It is also effective for adjusting the size of a hologram generated in the recording layer. That is, it is effective to provide a gap between the recording layer and the servo pit pattern because in the recording layer, it is necessary to form an interference region of the reference beam for recording and the information beam, having a certain degree of the size.

The first gap layer can be formed by applying a material such as ultraviolet ray curable resin from over a servo pit pattern by spin coating and curing it. When a transparent base whose surface is coated with a ultraviolet ray curable resin is used as the filter layer, the transparent base also works as the first gap layer.

The thickness of the first gap layer is not particularly limited, can be appropriately selected depending on the purpose and is preferably 1 µm to 200 µm.

### - Second gap layer-

The second gap layer is provided between the recording layer and the filter layer as needed.

The material of the second gap layer is not particularly limited, can be appropriately selected depending on the purpose, and examples thereof include transparent resin films such as triacetyl cellulose (TAC), polycarbonate (PC), polyethylene terephthalate (PET), polystyrene (PS), polysulfone (PSF), polyvinyl alcohol (PVA) and polymethyl methacrylate (PMMA), or norbornene based resin films such as a brand name ARTON film supplied from JSR and a brand name Zeonor supplied from Zeon Corporation. Among them, those having a high isotropy are preferable, and TAC, PC, the brand name ARTON and the brand name Zeonor are particularly preferable.

The thickness of the second gap layer is not particularly limited, can be appropriately selected depending on the purpose and is preferably 1 µm to 200 µm.

Here, the optical recording medium of the present invention will be further described in detail below with reference to the drawings.

### < First embodiment >

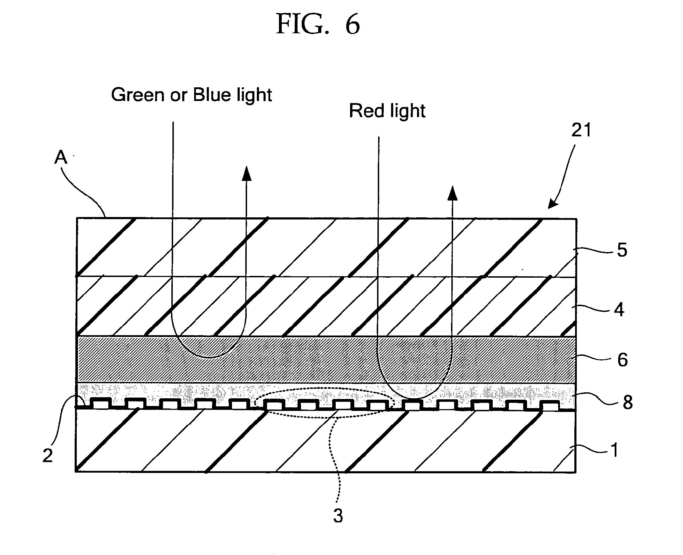

FIG. 6 is a schematic sectional view showing the layer configuration of the optical recording medium in a first embodiment of the present invention. In this optical recording medium 21 according to the first embodiment, a servo pit pattern 3 is formed on a substrate 1 made from a polycarbonate resin or a glass, and a reflective film 2 is provided by coating with aluminium, gold or platinum on the servo pit pattern 3. In FIG. 6, the servo pit pattern 3 is formed on the entire surface of the under substrate 1, but as shown in FIG.1, the servo pit pattern may be formed periodically. A height of this servo pit is 1750 angstroms (175 nm) in maximum, which is significantly small compared with the thickness of other layers including the substrate.

A first gap layer 8 is formed by applying the material such as ultraviolet ray curable resin on the reflective film 2 on the under substrate 1 by spin coating. The first gap layer 8 is effective for protecting the reflective film 2 as well as adjusting the size of the hologram generated in the recording layer 4. That is, it is effective to provide the first gap layer between the recording layer 4 and the servo pit pattern 3 because it is necessary to form an interference region of the reference beam for recording and the information beam having a certain degree of the size.

A filter layer 6 is provided on the first gap layer 8, and the optical recording medium 21 is constituted by sandwiching the recording layer 4 with the filter layer 6 and an upper substrate 5 (polycarbonate resin substrate or glass substrate).

In FIG. 6, the filter layer transmits only a red light, and does not transmit the light other than it. Therefore, since the information beam and the reference beam for recording and reproducing are a green or blue light, they do not transmit through the filter layer 6, do not reach the reflective film 2, become return lights, which exit from an entering and exiting side A

This filter layer 6 is a laminate in which three layers of cholesteric liquid crystal layers 6a, 6b and 6c have been laminated. The filter layer 6 which is the laminate of the cholesteric liquid crystal layers may be formed directly on the first gap layer 8 by applying or may be disposed by punching out the film in which the three layer laminated cholesteric liquid crystal layers have been formed on the base into the shape of the optical recording medium. By laminating the three layers of the cholesteric liquid crystal layers, a light reflectance at λ₀ to λ₀/cos20°, particularly λ₀ to λ₀/cos40° (λ₀ represents the irradiation light wavelength) is 40% or more, and no shift of the selective reflection wavelength is generated even when an incidence angle is changed.

The optical recording medium in the present embodiment may have a card shape or a disc shape. When it has a card shape, the servo pit pattern is not indispensable. In this optical recording medium, the thickness of the under substrate 1 is 0.6 mm, that of the first gap layer 8 is 100 µm, that of the filter layer 6 is 2 to 3 µm, that of the recording layer 4 is 0.6 mm and that of the upper substrate is 0.6 mm, and the total thickness is about 1.9 mm.

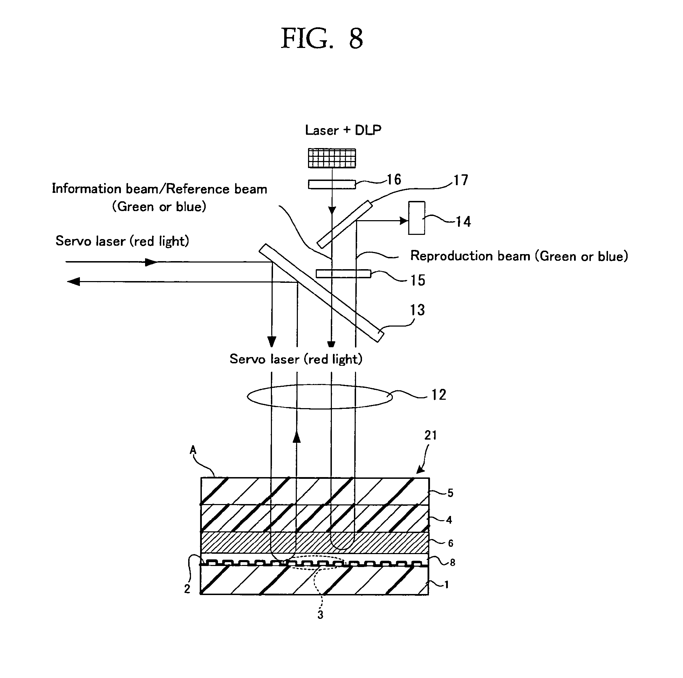

Subsequently, optical operations around the optical recording medium 21 will be described with reference to FIG. 8. First, the light (red light) emitted from the servo laser is reflected at almost 100% at a dichroic mirror 13 and passes through an objective lens 12. The light for the servo is irradiated to the optical recording medium 21 so as to adjust a focus on the reflective film 2 by the objective lens 12. That is, the dichroic mirror 13 transmits the light having a green or blue wavelength and reflects the light having a red wavelength at almost 100%. The servo light which entered from the entering and exiting side A of the optical recording medium 21 passes through the upper substrate 5, the recording layer 4, the filter layer 6 and the first gap layer 8, is reflected in the reflective film 2, passes again through the first gap layer 8, the filter layer 6, the recording layer 4 and the upper substrate 5, and exits from the entering and exiting side A. The return light which has exited passes through the objective lens 12, is reflected at almost 100% at the dichroic mirror 13, and servo information is detected by a servo information detector (not shown in the figure). The detected servo information is used for focus servo, tracking servo and slide servo. The hologram material which is composed of the recording layer 4 is not exposed by the red light. Thus, the servo light does not affect the recording layer 4 even if the servo light passes through the recording layer 4 or reflects diffusely in the reflective film 2. The return light of the servo light by the reflective film 2 is reflected at almost 100% at the dichroic mirror 13. Thus, the servo light is not detected by CMOS sensor or CCD14 for detecting a reproduced image, and does not become noise for the reproduction beam.

In a reflection region of λ₀ to 1.3λ₀ shown in FIG. 2, when λ₀ is 532 nm, 1.3λ₀ is 692 nm, and when the servo light has a wavelength of 655 nm, the servo light is reflected. The range of λ₀ to 1.3λ₀ shown here is the aptitude of ±40° incident light in the filter layer..When such a largely inclined light is actually used, the servo can be controlled without trouble if the servo light within the incidence angle ±20° is used by masking. If the average refractive index of each of the cholesteric liquid crystal layers in the filter used is sufficiently increased, it is easy to design the all within the ±20° incident light in the filter for optical recording media. In that case, two cholesteric liquid crystal layers of λ₀ to 1.1λ₀ could be laminated, and thus there is no trouble to transmit the servo light.

The information beam and the reference beam for recording generated from the laser for recording/reproducing pass through a polarizing plate to become linear polarized lights, which become circularly polarized lights when they pass through a half mirror 17 and then pass through a 1/4 wavelength plate 15. The light is irradiated to the optical recording medium so that the information beam and the reference beam for recording transmit the dichroic mirror 13 and generate an interference pattern by the objective lens 11 in the recording layer 4. The information beam and the reference beam for recording enter from the entering and exiting side A and interfere with each other in the recording layer 4 to generate the interference pattern there. Subsequently, the information beam and the reference beam for recording pass through the recording layer 4, enter in the filter layer 6, but are reflected before reaching the bottom of the filter layer 6 to become the return lights. That is, the information beam and the reference beam for recording do not reach the reflective film 2. Because, three cholesteric liquid crystal layers are laminated in the filter layer 6, which has a nature to transmit only the red light. Alternatively, when the light which leaks and passes through the filter layer is reduced to 20% or less of an incident light intensity, even if the leaked light reaches the bottom to become the return light, which is then reflected again in the filter layer. Thus, the light density contaminated in the reproduction beam is 20% x 20% =4% or less, which is not substantially problematic.

### < Second embodiment >

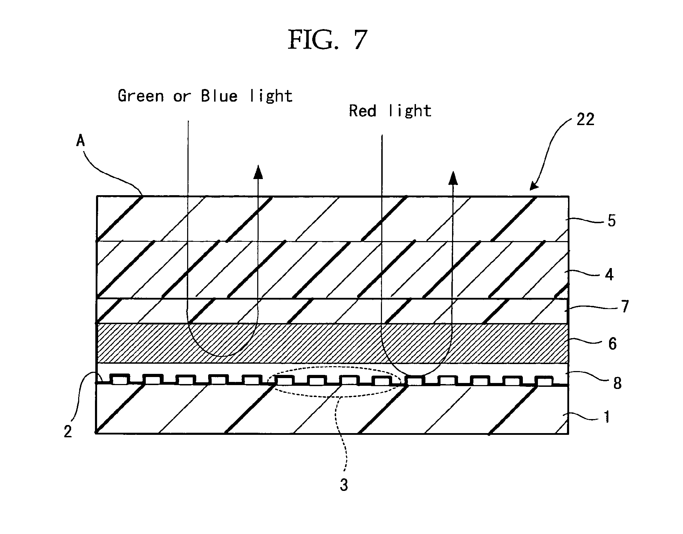

FIG. 7 is a schematic view showing the layer configuration of the optical recording medium in a second embodiment of the present invention. In the optical recording medium 22 according to the second embodiment, the servo pit pattern 3 is formed on the substrate 1 made from the polycarbonate resin or the glass, and the reflective film 2 is provided on the surface of the servo pit pattern 3 by coating with aluminium, gold or platinum. The height of this servo pin pattern 3 is typically 1750 angstroms (175 nm) as with the first embodiment.

The difference between the second embodiment and the first embodiment is that a second gap layer is provided between the filter layer 6 and the recording layer 4 in the optical recording medium 22 according to the second embodiment.

After forming the first gap layer 8, the filter layer 6 composed of the monolayer cholesteric liquid crystal layer where the helical pitch has been continuously changed in the thickness direction of the liquid crystal layer is formed on the first gap layer 8, and the same one as in the first embodiment can be used.

In the second gap layer 7, points to which the information beam and the reproduction beam focus are present. When this area is filled with the photopolymer, the excessive consumption of the monomer occurs due to excessive exposure to reduce the multiple recording capacity. Thus, it is effective to provide the inert and transparent second gap layer.

In the optical recording medium 22, the thickness of the under substrate 1 is 1.0 mm, that of the first gap layer 8 µm is 100 µm, that of the filter layer 6 is 3 µm to 5 µm, that of the second gap layer is 70 µm, that of the recording layer 4 is 0.6 mm and that of the upper substrate 5 is 0.4 mm, and the total thickness is about 2.2 mm.

When the information is recorded or reproduced, the red servo light and the green information beam and reference beam for recording and reproducing are irradiated to the optical recording medium 22 having such a structure. The servo light enters from the entering and exiting side A, passes through the recording layer 4, the second gap layer 7, the filter layer 6 and the first gap layer 8, and is reflected in the reflection film 2 to become the return light. This return light passes again through the first gap layer 8, the filter layer 6, the second gap layer 7, the recording layer 4 and the upper substrate 5 in this order, and exits from the entering and exiting side A. The return light which has exited is used for the focus servo and the tracking servo. The hologram material which composes the recording layer 4 is not exposed with the red light. Thus, the servo light does not affect the recording layer 4 even if the servo light passes through the recording layer 4 or reflects diffusely in the reflection film 2. The green information beam and the like enter from the entering and exiting side A, pass through the recording layer 4 and the second gap layer 7, and are reflected in the filter layer 6 to become the return lights. This return lights pass again through the second gap layer 7, the recording layer 4 and the upper substrate 5 in this order and exit from the entering and exiting side A. Also upon reproduction, of course the reference beam for reproducing and also the reproduction beam generated by irradiating the reference beam for reproducing to the recording layer 4 do not reach the reflection film 2 and exit from the entering and exiting side A. The optical operations in and around (objective lens 12, filter layer 6, CMOS sensor or CCD14 which is the detector in FIG. 8) the optical recording medium 22 is the same as in the first embodiment (FIG. 8). Thus, the description thereof is omitted.

### (Method for producing optical recording medium)

The method for producing the optical recording medium of the present invention includes at least a filter layer forming step, and includes a reflection film forming step, a recording layer forming step, and further if necessary other steps.

### -Filter layer forming step-

The filter layer forming step is a step of forming the filter layer by processing the filter for optical recording media of the present invention into the optical recording medium shape and bonding the processed filter to the under substrate.

Here, the method for producing the filter for optical recording media of the present invention is as described above.

The optical recording medium shape is not particularly limited, can be appropriately selected depending on the purpose, and includes the disk shape and the card shape.

The processing is not particularly limited, can be appropriately selected depending on the purpose, and includes for example, a cutting out processing by a press cutter, and a punching out processing by a punching cutter.

Specifically, the filter is bonded to the substrate using an adhesive or a tackiness agent so that no bubble is included.

The adhesive is not particularly limited, can be appropriately selected depending on the purpose, and includes for example, various adhesives of UV curable type, emulsion type, one liquid curable type and two liquid curable type. It is possible to optionally combine and use the publicly known adhesives.

The tackiness agent is not particularly limited, can be appropriately selected depending on the purpose, and includes rubber based tackiness agents, silicone based tackiness agents, urethane based tackiness agents, vinyl alkyl ether based tackiness agents, polyvinyl alcohol based tackiness agents, polyvinyl pyrrolidone based tackiness agents, polyacrylamide based tackiness agents and cellulose based tackiness agents.

An application thickness of the adhesive or the tackiness agent is not particularly limited, can be appropriately selected depending on the purpose, and is preferably 0.1 µm to 10 µm and more preferably 0.1 µm to 5 µm in the case of the adhesive, and is preferably 1 µm to 50 µm and more preferably 2 µm to 30 µm in the case of the tackiness agent in terms of optical property and thinning.

In some cases, the filter layer can also be formed directly on the substrate. For example, the method for forming the cholesteric liquid crystal layer by applying a coating solution for the cholesteric liquid crystal layer containing at least the nematic liquid crystal compound and the photoreactive chiral compound on the substrate is included.

### (Optical recording method and optical reproducing method)

In the optical recording method of the present invention, the optical recording medium of the present invention is irradiated with an information beam and a reference beam as a coaxial light flux to , and information is recorded based on an interference pattern formed by interference between the information beam and the reference beam.

In the optical reproducing method, information is reproduced by irradiating a reference beam to the interference pattern recorded on the recording layer by the optical recording method of the present invention.

As described above, in the optical recording method and the optical reproducing method of the present invention, information is recorded by overlapping the information beam to which the two dimensional intensity distribution has been given with the reference beam having nearly the same intensity as in the information beam inside the photosensitive recording layer and utilizing the interference pattern formed by them to generate the optical property distribution. Meanwhile, when the written information is read out (reproduced), by irradiating only the reference beam to the recording layer in the same arrangement as upon recording, the reproduction beam having an intensity distribution corresponding to the optical property distribution formed inside the recording layer is emitted from the recording layer.

Here, the optical recording method and the optical reproducing method of the present invention are carried out using an optical recording reproducing apparatus of the present invention described below.

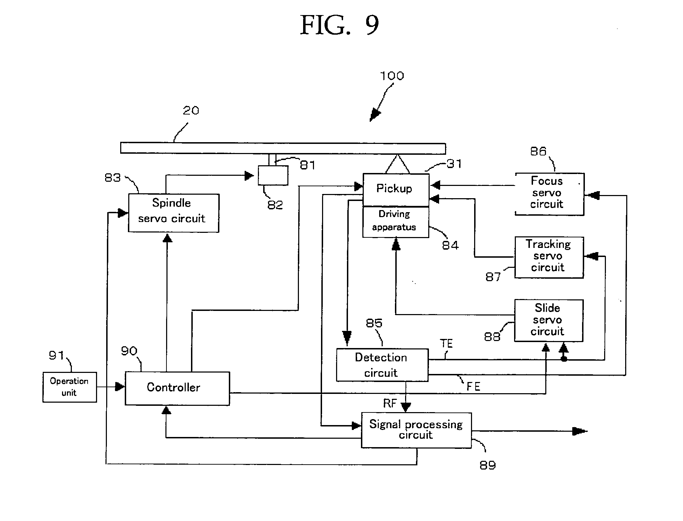

The optical recording reproducing apparatus used for the optical recording method and the optical reproducing method of the present invention will be described with reference to FIG. 9.

FIG. 9 is a block diagram showing the entire configuration of an optical recording reproducing apparatus according to one embodiment of the present invention. The optical recording reproducing apparatus includes an optical recording apparatus and an optical reproducing apparatus.

This optical recording reproducing apparatus 100 is equipped with a spindle 81 to which an optical recording medium 20 is attached, a spindle motor 82 which rotates the spindle 81 and a spindle servo circuit 83 which controls the spindle motor 82 so that the rotational frequency of the optical recording medium is kept at a given value.

The optical recording reproducing apparatus 100 is also equipped with a pickup 31 for recording information by irradiating an information beam and a reference beam for recording to the optical recording medium 20 as well as reproducing the information recorded in the optical recording medium 20 by irradiating a reproduction reference beam to the optical recording medium 20 to detect the reproduction beam, and a driving apparatus 84 which enables this pickup 31 to move in the radius direction of the optical recording medium 20.

The optical recording reproducing apparatus 100 is equipped with a detection circuit 85 for detecting a focus error signal FE, a tracking error signal TE and a reproduction signal RF by output signals from the pickup 31; a focus servo circuit 86 which performs focus servo by driving an actuator in the pickup 31 based on the focus error signal FE detected by this detection circuit 85 to move an objective lens (not shown in the figure) in the thickness direction of the optical recording medium 20; a tracking servo circuit 87 which performs tracking servo by driving the actuator in the pickup 31 based on the tracking error signal TE detected by the detection circuit 85 to move the objective lens in the radius direction of the optical recording medium 20; and a slide servo circuit 88 which performs slide servo by controlling the driving apparatus 84 based on the tracking error signal TE and a command from a controller described later to move the pickup 31 in the radius direction of the optical recording medium 20.

The optical recording reproducing apparatus 100 is further equipped with a signal processing circuit 89 which reproduces data recorded in the data area in the optical recording medium 20 by decoding output data from CMOS or CCD array to be described later in a pickup 31, reproduces a basic clock by reproduction signal RF from the detection circuit 85 and determines an address; a controller 90 which totally controls the optical recording reproducing apparatus 100; and an operation unit 91 which gives various instructions to the controller 90.

The controller 90 inputs a basic clock and address information output from a signal processing circuit 89 as well as controls the pickup 31, the spindle servo circuit 83 and the slide servo circuit 88. The spindle servo circuit 83 inputs the basic clock output from the signal processing circuit 89. The controller 90 has CPU (central processing unit), ROM (read only memory) and RAM (random access memory), and CPU and runs programs housed in ROM to realize the functions of the controller 90 utilizing the RAM as a working area.

In the optical recording reproducing apparatus used for the optical recording method and the optical reproducing method of the present invention, the optical recording medium of the present invention is used. Thus, the optical recording reproducing apparatus is capable of preventing diffused reflection from a reflective layer caused by an information beam and a reference beam in the optical recording medium and preventing occurrences of noise without causing deviation in selective reflection wavelength even when an incidence angle is changed, as well as capable of achieving high density recording which has not be conventionally achieved.

According to the present invention, it is possible to provide a filter for optical recording media that can solve various conventional problems and is capable of preventing diffused reflection from a reflective layer caused by an information beam and a reference beam in an optical recording medium and preventing occurrences of noise without causing deviation in selective reflection wavelength even when an incidence angle is changed; a holographic optical recording medium capable of performing high density recording using the filter for optical recording media; a method for producing the optical recording medium efficiently at low cost, as well as an optical recording method and an optical reproducing method using the optical recording medium.

### Examples

Examples of the present invention will be described below, however, the present invention is not limited to these Examples at all.

### (Example 1 and Comparative Example 1)

### - Production of filter for optical recording media-

First, a base film obtained by applying polyvinyl alcohol (brand name: MP203 supplied from Kuraray Co., Ltd.) with a thickness of 1 µm on a polycarbonate film (brand name: UPILON supplied from Mitsubishi Gas Chemical Co., Inc.) having a thickness of 100 µm was prepared. A crystal orientation capacity was imparted by passing this base film through a rubbing apparatus and rubbing a polyvinyl alcohol film side.

Subsequently, coating solutions for the cholesteric liquid crystal layer of Example 1 and Comparative Example 1 having the composition shown in the following Table 1 were prepared by conventional method.

**Table 1**

| Component (part by mass) | Coating solution for cholesteric liquid crystal layer | |
|---|---|---|
| | Example 1 | Comparative Example 1 |
| UV polymerizable liquid crystal | 94.74 | 94.74 |
| Chiral agent | - | 5.26 |
| Photoreactive chiral agent | 6.50 | - |
| Photopolymerization initiator | 0.10 | 0.10 |
| Sensitizer | 0.02 | 0.02 |
| Solvent | 400 | 400 |

| | | |
|---|---|---|
| *UV polymerizable liquid crystal: brand name: PALIOCOLOR LC242 supplied from BASF *Chiral agent: brand name: ALIOCOLOR LC756 supplied from BASF *Photoreactive chiral agent: photoactive isosorbide derivative represented by the following formula 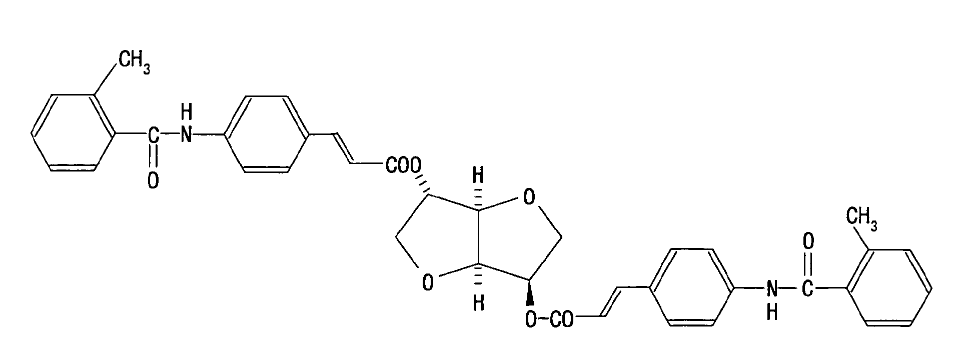 *Photopolymerization initiator: brand name: IRGACURE 369 supplied from Ciba Specialty Chemicals *Sensitizer: diethyl thioxanthone *Solvent: methyl ethyl ketone (MEK) | | |

Subsequently, the coating solution for cholesteric liquid crystal layer was applied onto the base film using a bar coater, dried and then matured for orientation at 110°C for 20 seconds. Subsequently, the light was irradiated by an ultrahigh pressure mercury lamp for one minute via a band pass filter having a light source central wavelength of 365 nm at 110°C. Then, the film was retained in a dark place kept at 110°C for 5 minutes. Subsequently, the band pass filter was removed, and a cholesteric liquid crystal cured film having a thickness of 5 µm was formed by exposing the entire surface with irradiation energy of 500 mJ/cm² using the same ultrahigh pressure mercury lamp as the above with spraying nitrogen gas to polymerize and cure.

By the above, the filters for optical recording media of Example 1 and Comparative Example 1 were produced.

For the obtained filters for optical recording media, a light reflection property was measured using spectral reflection measurement apparatuses (L-5662 supplied from Hamamatsu Photonics K.K. as a light source and PMA-11 supplied from Hamamatsu Photonics K.K. as a photo multichannel analyzer).

As a result, it was observed that the filter for optical recording media of Example 1 could reflect 40% or more of the light of 532 nm which was the selective wavelength for the light within ±20° of the incidence angle as shown in FIGs. 4 and 5. A width of the selective reflection wavelength zone was 180 nm which was a broad zone.

In contrast, in the filter for optical recording media of Comparative Example 1, the width of the selective reflection wavelength zone was about 50 nm which was a narrow zone, and the selective wavelength largely shifted from the incidence angle of 40°.

### (Example 2)

### -Production of optical recording medium-

A common substrate made from a polycarbonate resin having a diameter of 120 mm and a plate thickness of 0.6 mm and used for DVD+RW was used as the under substrate. A servo pit pattern was formed on the entire surface of this substrate, its track pitch was 0.74 µm, a groove depth was 175 nm and a groove width was 300 nm.

First a reflection film was formed on the servo pit pattern surface on the under substrate. Aluminium (A1)was used for the material of the reflection film. The A1 reflection film having a thickness of 200 nm was formed by DC magnetron sputtering method.

Subsequently, the filter for optical recording media produced in Example 1 was punched out into a given disc size so as to dispose on the substrate, and bonded by making a base film face a servo pit pattern side. The bonding was performed using an ultraviolet ray curable resin and a tackiness agent so that no bubble was included. By the above, the filter layer was formed.

Subsequently, as a recording layer material, a photopolymer coating solution having the following composition was prepared.

**<Composition of photopolymer coating solution>**

| | |
|---|---|
| Di(urethane acrylate) oligomer (ALU-351 supplied from Echo Resins) | 59 parts by mass |
| Isobornyl acrylate | 30 parts by mass |
| Vinyl benzoate | 10 parts by mass |
| Polymerization initiator (IRGACURE 784 supplied from Ciba Specialty Chemicals) | 1 part by mass |

The obtained photopolymer coating solution was placed on the filter layer using a dispenser, and as the upper substrate having a diameter of 12 mm and a thickness of 0.6 mm made from the polycarbonate resin was pressed on this photopolymer, a disc end section was bonded to the upper substrate with the adhesive. The disc end section is provided with a flange section so that the thickness of the photopolymer layer is 500 µm. The thickness of the photopolymer layer is determined by adhering the upper substrate here, and the extra photopolymer overflows and is removed. By the above, the optical recording medium of Example 2 was produced. FIG. 6 is a schematic sectional view showing the form similar to that of Example 2.

### (Example 3)

### -Production of optical recording medium-

An optical recording medium of Example 3 was produced in the same way as in Example 2, except that the second gap layer was provided between the reflection film and the filter layer in Example 2. As the second gap layer, a polycarbonate film having a thickness of 100 µm was used, and adhered with the ultraviolet ray curable resin. FIG. 7 is a schematic sectional view showing the form similar to that of Example 3.

### (Comparative Example 2)

### -Production of optical recording medium-

An optical recording medium of Comparative Example 2 was produced in the same way as in Example 2, except that the filter for optical recording media of Comparative Example 1 was used in place of the filter for optical recording media of Example 1.

### <Performance evaluation>

For the obtained respective optical recording media in Examples 2 to 3 and Comparative Example 2, the number of multiple recordable times was measured by mounting in the optical recording reproducing apparatus as shown in FIG. 9 and actually recording the information. Results are shown in Table 2.

**Table 2**

| | Number of Multiple Recordable Times |
|---|---|
| Example 2 | 5 to 10 |
| Example 3 | 50 to 250 |
| Comparative Example 2 | 0 to 1 |

From the results shown in Table 2, it was observed that multiple high density recording which is a final goal of the holographic optical recording medium is enabled by continuously changing the helical pitch in the thickness direction of the monolayer cholesteric liquid crystal layer although some deviations occur by adjusting the intensity of the information beam and the reproduction beam.

### INDUSTRIAL APPLICABILITY

The filter for optical recording media of the present invention can prevent occurrences of noise without causing deviation of selective reflection wavelength even when an incidence angle is changed, and is suitably used as a wavelength selective reflection film in the holographic optical recording medium capable of recording high density images, which has not been conventionally achieved.

The optical recording medium of the present invention can prevent occurrences of noise without causing deviation of selective reflection wavelength even when an incidence angle is changed, and is widely used as a holographic optical recording medium capable of recording high density images, which has not been conventionally achieved.

## Claims

1. A filter for optical recording media, comprising:
a monolayer cholesteric liquid crystal layer,
wherein the cholesteric liquid crystal layer comprises at least a nematic liquid crystal compound and a photoreactive chiral compound.

2. The filter for optical recording media according to claim 1, wherein the photoreactive chiral compound has a chiral site and a photoreactive group, and the chiral site is at least one selected from isosorbide compounds, isomanide compounds and binaphthol compounds.

3. The filter for optical recording media according to claim 2, wherein the photoreactive group is a group which induces isomerization from trans to cis in a carbon-carbon double bond by light irradiation.

4. The filter for optical recording media according to any one of claims 1 to 3,
wherein the cholesteric liquid crystal layer has a selective reflection wavelength zone, and the selective reflection wavelength zone is continuous.

5. The filter for optical recording media according to any one of claims 1 to 4,
wherein the width of the selective reflection wavelength zone in the cholesteric liquid crystal layer is 100 nm or more.

6. The filter for optical recording media according to any one of claims 1 to 5,
wherein a light having a first wavelength is transmitted and a light having a second wavelength which is different from the light having the first wavelength is reflected.

7. The filter for optical recording media according to claim 6, wherein the light having the first wavelength has a wavelength of 350 nm to 600 nm and the light having the second wavelength has a wavelength of 600 nm to 900 nm.

8. The filter for optical recording media according to any one of claims 1 to 7,
wherein a light reflectance at λ₀ to λ₀/cos20° is 40% or more, where λ₀ represents an irradiation light wavelength.

9. The filter for optical recording media according to any one of claims 1 to 8,
wherein a light reflectance at λ₀ to λ₀/cos40° is 40% or more, where λ₀ represents an irradiation light wavelength.

10. The filter for optical recording media according to any one of claims 1 to 9 used as a selective reflection film in an optical recording medium which records information by utilizing holography.

11. The filter for optical recording media according to claim 10, wherein the optical recording medium records information by irradiating the optical recording medium with an information beam and a reference beam as a coaxial light flux based on an interference pattern formed by interference between the information beam and the reference beam.

12. An optical recording medium, comprising:
an upper substrate,
an under substrate,
a recording layer which records information using holography on the under substrate, and
a filter layer between the under substrate and the recording layer,
wherein the filter layer comprises a monolayer cholesteric liquid crystal layer, and the cholesteric liquid crystal layer comprises at least a nematic liquid crystal compound and a photoreactive chiral compound.

13. The optical recording medium according to claim 12, wherein the photoreactive chiral compound has a chiral site and a photoreactive group, and the chiral site is at least one selected from isosorbide compounds, isomanide compounds and binaphthol compounds.

14. The optical recording medium according to claim 13, wherein the photoreactive group is a group which induces isomerization from trans to cis in a carbon-carbon double bond by light irradiation.

15. The optical recording medium according to any one of claims 12 to 14,
wherein the cholesteric liquid crystal layer has a selective reflection wavelength zone, and the selective reflection wavelength zone is continuous.

16. The optical recording medium according to any one of claims 12 to 15,
wherein the width of the selective reflection wavelength zone in the cholesteric liquid crystal layer is 100 nm or more.

17. The optical recording medium according to any one of claims 12 to 16,
wherein a light having a first wavelength is transmitted to the filter layer and a light having a second wavelength which is different from the light having the first wavelength is reflected by the filter layer.

18. The optical recording medium according to claim 17, wherein the light having the first wavelength has a wavelength of 350 nm to 600 nm and the light having the second wavelength has a wavelength of 600 nm to 900 nm.

19. The optical recording medium according to any one of claims 12 to 18,
wherein a light reflectance at λ₀ to λ₀/cos20° is 40% or more, where λ₀ represents an irradiation light wavelength.

20. The optical recording medium according to any one of claims 12 to 19,
wherein a light reflectance at λ₀ to λ₀/cos40° is 40% or more, where λ₀ represents an irradiation light wavelength.

21. The optical recording medium according to any one of claims 12 to 20,
wherein the substrate comprises a servo pit pattern.

22. The optical recording medium according to claim 21, wherein the servo pit pattern has a reflection film on the surface thereof.

23. The optical recording medium according to claim 22, wherein the reflection film is a metallic reflection film.

24. The optical recording medium according to any one of claims 22 to 23, further comprising a first gap layer for smoothening the substrate surface between the filter layer and the reflection film.

25. The optical recording medium according to any one of claims 12 to 24, further comprising a second gap layer between the recording layer and the filter layer.

26. A method for producing an optical recording medium, comprising:
forming a filter layer by processing a filter for optical recording media according to any one of claims 1 to 11 into an optical recording medium shape, and bonding the processed filter to an under substrate,
wherein the optical recording medium comprises an upper substrate, the under substrate, a recording layer which records information using holography on the under substrate, and the filter layer between the under substrate and the recording layer,
wherein the filter layer comprises a monolayer cholesteric liquid crystal layer, and the cholesteric liquid crystal layer comprises at least a nematic liquid crystal compound and a photoreactive chiral compound.

27. An optical recording method, comprising:
irradiating an optical recording medium according to any one of claims 12 to 25 with an information beam and a reference beam as a coaxial light flux, and
recording information on a recording layer based on an interference pattern formed by interference between the information beam and the reference beam.

28. An optical reproducing method, comprising:
reproducing information by irradiating with a reference beam an interference pattern recorded on a recording layer by an optical recording method according to claim 27.
